(19) **Europäisches Patentamt European Patent Office Office européen des brevets**

(11) **EP 4 395 325 A1**

(12) **EUROPEAN PATENT APPLICATION**

(43) Date of publication:
**03.07.2024 Bulletin 2024/27**

(21) Application number: **23218955.5**

(22) Date of filing: **21.12.2023**

(51) International Patent Classification (IPC):
**H04N 19/70** (2014.01)     **H04N 19/117** (2014.01)
**H04N 19/172** (2014.01)

(52) Cooperative Patent Classification (CPC):
**H04N 19/70; H04N 19/117; H04N 19/172**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.12.2022 JP 2022208534**

(71) Applicant: **Sharp Kabushiki Kaisha**
**Sakai-shi**
**Osaka 590-8522 (JP)**

(72) Inventors:
• **TAKADA, Keiichiro**
  **Sakai City, Osaka 590-8522 (JP)**
• **IKAI, Tomohiro**
  **Sakai City, Osaka 590-8522 (JP)**
• **TOKUMO, Yasuaki**
  **Sakai City, Osaka 590-8522 (JP)**
• **AONO, Tomoko**
  **Sakai City, Osaka 590-8522 (JP)**
• **CHUJOH, Takeshi**
  **Sakai City, Osaka 590-8522 (JP)**

(74) Representative: **Müller Hoffmann & Partner**
**Patentanwälte mbB**
**St.-Martin-Straße 58**
**81541 München (DE)**

(54) **CODING APPARATUS AND DECODING APPARATUS**

(57)     - Use of only supplemental enhancement information of a deep learning post-filter cannot adjust a filter strength in a case that each frame has a different image feature, thus reducing image quality improvement performance.

- A decoding apparatus for decoding coded data includes a header decoder that decodes supplemental enhancement information of a deep learning post-filter from the coded data, an attribute image decoder that decodes an attribute image from the coded data, and an attribute image filter unit that performs filtering processing of the attribute image, wherein the header decoder decodes objective information indicating that the attribute image filter unit is to perform filtering processing on the attribute image.

FIG. 6

EP 4 395 325 A1

**Description**

RELATED APPLICATIONS

This application claims the benefit of Japanese Patent Application No. 2022-208534, filed on December 26, 2022, which is hereby incorporated by reference in its entirety.

Technical Field

Embodiments of the present invention relate to a (3D data) coding apparatus and a (3D data) decoding apparatus.

Background Art

A 3D data coding apparatus that converts 3D data into a two-dimensional image and encodes it using a video coding scheme to generate coded data and a 3D data decoding apparatus that decodes and reconstructs a two-dimensional image from the coded data to generate 3D data are provided to efficiently transmit or record 3D data. Also, there is a technique for filtering a two-dimensional image using supplemental enhancement information of a deep learning post-filter.

Specific 3D data coding schemes include, for example, MPEG-I Volumetric Video-based Coding (V3C) and Video-based Point Cloud Compression (V-PCC) (NPL 1). V3C can encode and decode multi-view videos as well as point clouds including point positions and attribute information. Existing video coding schemes include, for example, H.266/VVC and H.265/HEVC. Supplemental Enhancement Information (SEI) for transmitting image properties, display methods, timings, and the like simultaneously with coded data has been disclosed and SEI for deep learning post-filters has also been disclosed (NPL 2).

Citation List

Non-Patent Literature

NPL 1:

ISO/IEC 23090-5

NPL 2:

"Additional SEI messages for VSEI (Draft 3)", Joint Video Experts Team (JVET) of ITU-T SG 16 WP 3 and ISO/IEC JTC 1/SC 29, JVET-AB2006, 2022

Summary of Invention

Technical Problem

In the 3D data coding scheme of NPL 1, attributes (color images) included in 3D data are encoded and decoded using a video coding scheme such as HEVC or VVC. However, there is a problem that the accuracy and image quality of reconstructed 3D data deteriorate due to distortion of color images caused by encoding. Also, there is a problem that use of only the supplemental enhancement information of the deep learning post-filter described in NPL 2 cannot sufficiently adjust the filter strength in a case that each attribute image or each frame has a different image feature, thus reducing image quality improvement performance.

It is an object of the present invention to reduce coding distortion in 3D data encoding and/or decoding using a video coding scheme and to encode and/or decode 3D data with high quality.

Solution to Problem

A 3D data decoding apparatus according to an aspect of the present invention to solve the above problems is a 3D data decoding apparatus for decoding coded data and decoding 3D data including position information and attribute information, the 3D data decoding apparatus including a header decoder that decodes supplemental enhancement information of a deep learning post-filter from the coded data, an attribute image decoder that decodes an attribute image from the coded data, and an attribute image filter unit that performs filtering processing of the attribute image, wherein the header decoder decodes objective information indicating that the attribute image filter unit is to perform filtering processing on the attribute image.

A 3D data coding apparatus according to an aspect of the present invention to solve the above problems is a 3D data coding apparatus for encoding 3D data, the 3D data coding apparatus including a multiplexer configured to encode supplemental enhancement information of a deep learning post-filter, an attribute image filter parameter deriver configured to derive a filter parameter of an attribute image of the 3D data, and an attribute image coder configured to encode the attribute image.

Advantageous Effects of Invention

According to an aspect of the present invention, it is possible to reduce distortion caused by encoding a color image and to encode and/or decode 3D data with high quality.

Brief Description of Drawings

FIG. 1 is a schematic diagram illustrating a configuration of a 3D data transmission system according to the present embodiment.
FIG. 2 is a diagram illustrating a hierarchical structure of data of a coded stream.
FIG. 3 is a diagram for explaining 3D data, an occupancy map, a geometry image, and an attribute image.
FIG. 4 is a diagram for explaining a layer structure of geometry images and attribute images.
FIG. 5 is a diagram illustrating a relationship between characteristics SEI and activation SEI according to an embodiment of the present invention.
FIG. 6 is a functional block diagram illustrating a schematic configuration of a 3D data decoding apparatus 31 according to an embodiment of the present invention.
FIG. 7 is a functional block diagram illustrating a configuration of an attribute image filter unit 308 in the 3D data decoding apparatus 31.
FIG. 8 is a functional block diagram illustrating a configuration of the attribute image filter unit 308 in the 3D data decoding apparatus 31.
FIG. 9 is a functional block diagram illustrating a configuration of the attribute image filter unit 308 in the 3D data decoding apparatus 31.
FIG. 10 is a functional block diagram illustrating a schematic configuration of a 3D data coding apparatus 11 according to an embodiment of the present invention.
FIG. 11 is a flowchart illustrating an SEI decoding process.
FIG. 12 shows an example of a syntax of a neural network post-filter characteristics SEI message.
FIG. 13 shows an example of a syntax of a neural network post-filter activation SEI message.
FIG. 14 shows an example of a syntax of a neural network post-filter activation SEI message.
FIG. 15 shows an example of a syntax of a neural network post-filter activation SEI message.
FIG. 16 shows an example of a syntax of a neural network post-filter activation SEI message.
FIG. 17 shows an example of a syntax of a neural network post-filter activation SEI message.
FIG. 18 shows an example of a syntax of a neural network post-filter activation SEI message.
FIG. 19 shows an example of a syntax of a neural network post-filter activation SEI message.

Description of Embodiments

Embodiments of the present invention will be described below with reference to the drawings.

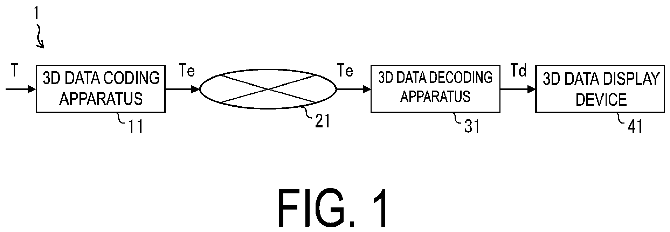

FIG. 1 is a schematic diagram illustrating a configuration of a 3D data transmission system 1 according to the present embodiment.
The 3D data transmission system 1 is a system that transmits a coded stream obtained by encoding 3D data to be coded, decodes the transmitted coded stream, and displays 3D data. The 3D data transmission system 1 includes a 3D data coding apparatus 11, a network 21, a 3D data decoding apparatus 31, and a 3D data display device 41.
3D data T is input to the 3D data coding apparatus 11.
The network 21 transmits a coded stream Te generated by the 3D data coding apparatus 11 to the 3D data decoding apparatus 31. The network 21 is the Internet, a Wide Area Network (WAN), a Local Area Network (LAN), or a combination thereof. The network 21 is not necessarily a bidirectional communication network and may be a unidirectional communication network that transmits broadcast waves for terrestrial digital broadcasting, satellite broadcasting, or the like. The network 21 may be replaced by a storage medium on which the coded stream Te is recorded, such as a Digital Versatile Disc (DVD) (trade name) or a Blu-ray Disc (BD) (trade name).

The 3D data decoding apparatus 31 decodes each coded stream Te transmitted by the network 21 and generates one or more pieces of decoded 3D data Td.

The 3D data display device 41 displays all or some of one or more pieces of decoded 3D data Td generated by the 3D data decoding apparatus 31. The 3D data display device 41 includes a display device such as, for example, a liquid crystal display or an organic Electroluminescence (EL) display. Examples of display types include stationary, mobile, and HMD. The 3D data display device 41 displays a high quality image in a case that the 3D data decoding apparatus 31 has high processing capacity and displays an image that does not require high processing or display capacity in a case that it has only lower processing capacity.

Structure of Coded Stream Te

A data structure of the coded stream Te generated by the 3D data coding apparatus 11 and decoded by the 3D data decoding apparatus 31 will be described.

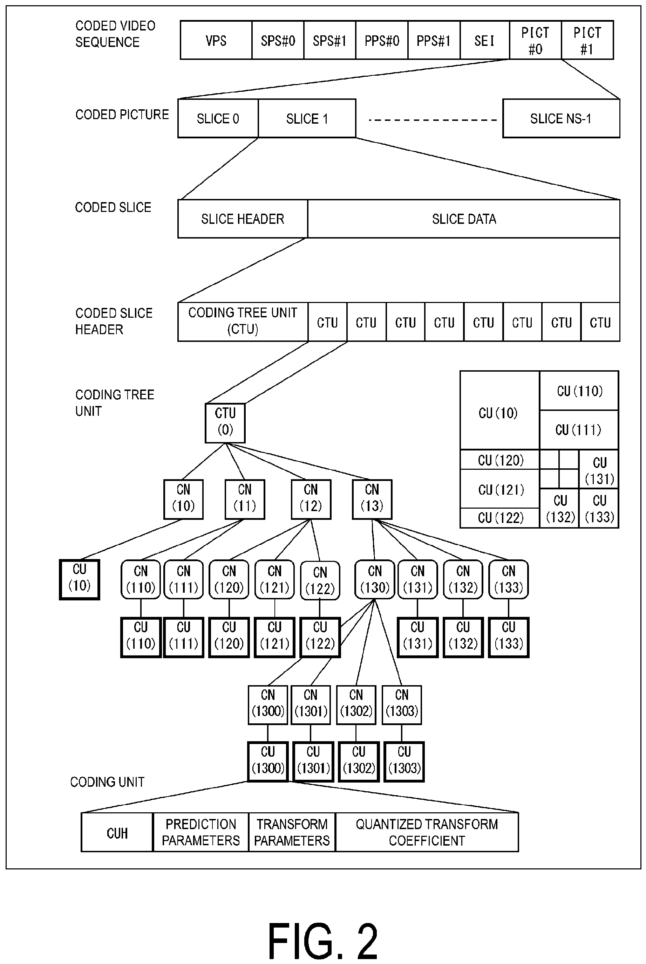

FIG. 2 is a diagram illustrating a hierarchical structure of data of the coded stream Te. The coded stream Te exemplarily includes a sequence and a plurality of pictures that constitute the sequence. FIG. 2 illustrates a coded video sequence that defines a sequence SEQ, a coded picture that defines a picture PICT, a coded slice that defines a slice S, coded slice data that defines slice data, coding tree units included in coded slice data, and coding units included in each coding tree unit.

Coded Video Sequence

A Coded Video Sequence (CVS) defines a set of data that the 3D data decoding apparatus 31 refers to in order to decode the sequence SEQ to be processed. As illustrated in the coded video sequence of FIG. 2, the sequence SEQ includes a Video Parameter Set (VPS), Sequence Parameter Sets (SPSs), Picture Parameter Sets (PPSs), pictures PICT, and Supplemental Enhancement Information (SEI). Three-dimensional data may further include other parameter sets.

A VPS defines a set of coding parameters common to a plurality of video images, each including a plurality of layers, and a set of coding parameters relating to a plurality of layers and individual layers included in each video image.

An SPS defines a set of coding parameters that the 3D data decoding apparatus 31 refers to in order to decode a target sequence. For example, an SPS defines the width and height of a picture. A plurality of SPSs may also be present. In this case, one of the plurality of SPSs is selected from a PPS.

A Picture Parameter Set (PPS) defines a set of coding parameters that the 3D data decoding apparatus 31 refers to in order to decode a picture in the target sequence. For example, a PPS includes a reference value for a quantization step size used in picture decoding (pic_init_qp_minus26) and a flag indicating application of weighted prediction (weighted_pred_flag). Here, a plurality of PPSs may be present. In this case, one of the plurality of PPSs is selected from each picture in the target sequence.

Coded Picture

Each coded picture defines a set of data that the 3D data decoding apparatus 31 refers to in order to decode a picture PICT to be processed. As illustrated in a coded picture of FIG. 2, a picture PICT includes slices 0 to NS-1 (where NS is the total number of slices included in the picture PICT).

Coded Slice

Each coded slice defines a set of data that the 3D data decoding apparatus 31 refers to in order to decode the slice S to be processed. Each slice includes a slice header and slice data as illustrated in a coded slice of FIG. 2.

The slice header includes a group of coding parameters that the 3D data decoding apparatus 31 refers to in order to determine a decoding method for the target slice. Slice type specifying information (slice_type) that specifies the slice type is an example of a coding parameter included in the slice header.

Examples of slice types that can be specified by the slice type specifying information include (1) an I slice for which only intra-prediction is used for encoding, (2) a P slice for which unidirectional prediction or intra-prediction is used for encoding, (3) a B slice for which unidirectional prediction, bidirectional prediction, or intra-prediction is used for encoding. Here, inter-prediction is not limited to uni-prediction or bi-prediction and may generate a predicted image using more reference pictures. Hereinafter, when a P or B slice is stated, it refers to a slice that includes blocks for which inter-prediction can be used.

Coded Slice Data

Coded slice data defines a set of data that the 3D data decoding apparatus 31 refers to in order to decode slice data to be processed. Slice data includes CTUs as illustrated in a coded slice header of FIG. 2. CTUs are blocks of a fixed size (e.g., 64x64) that constitute a slice and are also called Largest Coding Units (LCUs).

Coding Tree Unit

Each Coding Tree Unit (CTU) in FIG. 2 defines a set of data that the 3D data decoding apparatus 31 refers to in order to decode a CTU to be processed. A CTU is split into coded units (CUs) which are basic coding processing units through recursive Quad Tree (QT) splitting, Binary Tree (BT) splitting, or Ternary Tree (TT) splitting.

Coded Unit

Each coded unit (CU) defines a set of data that the 3D data decoding apparatus 31 refers to in order to decode a CU to be processed as illustrated in a CU of FIG. 2. Specifically, a CU includes a CU Header (CUH), prediction parameters, transform parameters, quantized transform coefficients, and the like. The CU header defines a prediction mode and the like.

There are two types of prediction (prediction modes): intra-prediction and inter-prediction. Intra-prediction refers to prediction within the same picture and inter-prediction refers to prediction processing performed between different pictures (e.g., between different display times or between different layer images).

Although transform/quantization processing is performed in units of CUs, the quantized transform coefficients may be entropy-encoded in units of subblocks such as $4\times4$ subblocks.

Prediction Parameters

A predicted image is derived by prediction parameters associated with blocks. The prediction parameters include intra-prediction and inter-prediction parameters.

Data Structure of Three-Dimensional Stereoscopic Information

Three-dimensional Stereoscopic information (3D data) in the present specification is a set of position information (x, y, z) in a three-dimensional space and attribute information. For example, 3D data is expressed in the format of a point cloud that is a group of points with position information in a three-dimensional space and attribute information or a mesh having triangle (or polygon) vertices and faces.

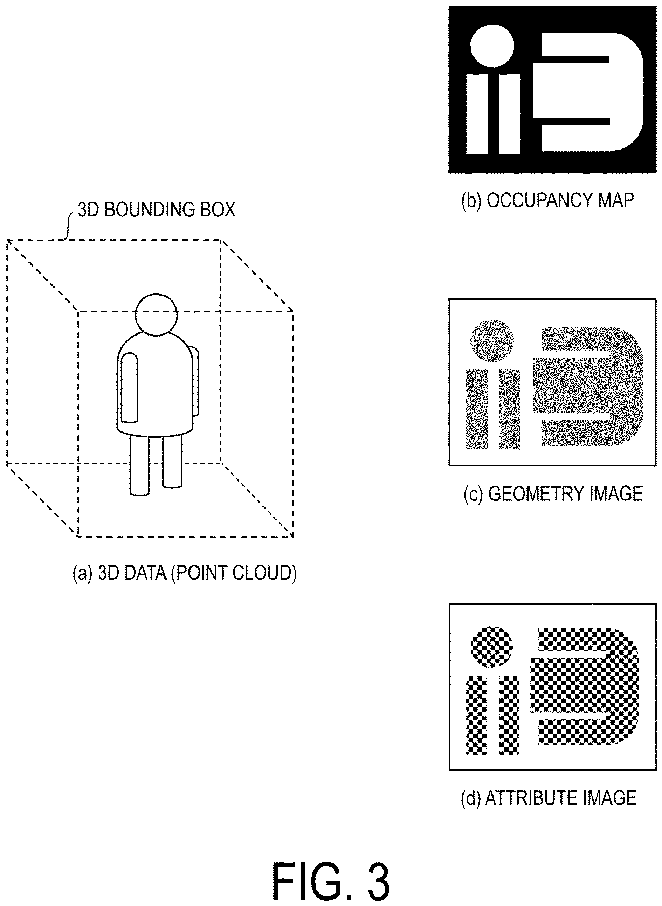

FIG. 3 is a diagram for explaining 3D data, an occupancy map, a geometry image (position information), and an attribute image. A point cloud and a mesh that constitute the 3D data are divided into a plurality of parts (regions) by the 3D data coding apparatus 11 and a point cloud included in each part is projected onto a plane of a 3D bounding box set in a 3D space (FIG. 3 (a)). The 3D data coding apparatus 11 generates a plurality of patches from the projected point cloud. Information regarding the 3D bounding box (such as coordinates and sizes) and information regarding mapping to the projection planes (such as the projection planes, coordinates, sizes, and presence or absence of rotation of each patch) are referred to as atlas information. An occupancy map is an image showing valid areas of patches (areas where a point cloud or a mesh exists) as a 2D binary image (e.g., with 1 for a valid area and 0 for an invalid area) (FIG. 3(b)). Here, values other than 0 and 1 such as 255 and 0 may be used as the values of the valid and invalid areas. A geometry image is an image showing the depth values (distances) of patches with respect to the projection plane (FIG. 3(c)). The relationship between the depth values and the pixel values may be linear or the distances may be derived from the pixel values using a lookup table, a mathematical formula, or a relational formula based on a combination of branches based on values. An attribute image is an image showing the attributes (e.g., RGB colors) of points. Each of the occupancy map image, the geometry image, the attribute image, and the atlas information may be an image obtained by mapping (placing) partial images (patches) from different projection planes onto a certain two-dimensional image. The atlas information includes information on the number of patches and the projection planes corresponding to the patches. The 3D data decoding apparatus 31 reconstructs the coordinates and attribute information of a point cloud or a mesh from the atlas information, the occupancy map, the geometry image, and the attribute image. Here, points are points of a point cloud or vertices of a mesh. Instead of the occupancy map image and the geometry image, mesh information (position information) indicating the vertices of the mesh may be encoded, decoded, and transmitted. Mesh information may also be encoded, decoded, and transmitted after being divided into a base mesh that forms a basic mesh that is a subset of the mesh and a mesh displacement that indicates a displacement from the base mesh to indicate a mesh part other than the basic mesh.

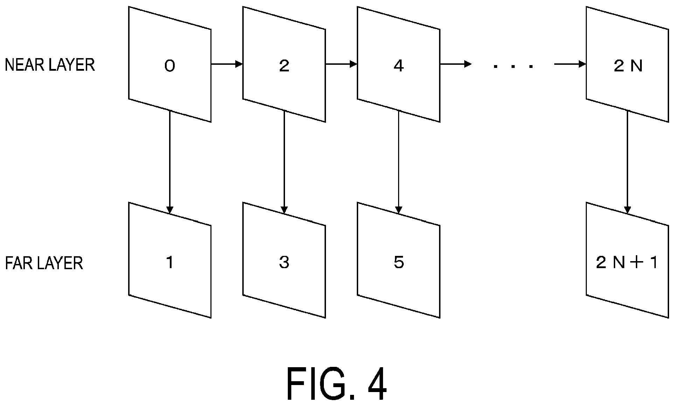

FIG. 4 is a diagram for explaining a layer structure of geometry images and attribute images. Each of a geometry image and an attribute image may include a plurality of images (layers). For example, each of a geometry image and an attribute image may include a Near layer and a Far layer. Here, a Near layer and a Far layer are video images having geometries and attributes with different depths when viewed from a certain projection plane. A Near layer may be a set of points that have the minimum depths to pixels on the projection plane. A Far layer may be a set of points that have maximum depths to pixels on the projection plane within a predetermined range (e.g., a range of a distance d from the Near layer).

The geometry image coder 106 which will be described later may encode a geometry image of the Near layer as an intra-coded picture (an I picture) and a geometry image of the Far layer as an inter-coded picture (a P picture or a B picture). Alternatively, geometry images of the Near and Far layers may be encoded such that they can be identified on a bitstream using an LayerID (a nuh_layer_id syntax) of a Network Abstraction Layer (NAL) unit such as LayerID=0 for the Near layer and LayerID=1 for the Far layer. Geometry images of the Near and Far layers may also be encoded such that they can be identified on a bitstream using a TemporalID of an NAL unit such as TemporalID=0 for the Near layer and TemporalID=1 for the Far layer.

Overview of Characteristics SEI and Activation SEI

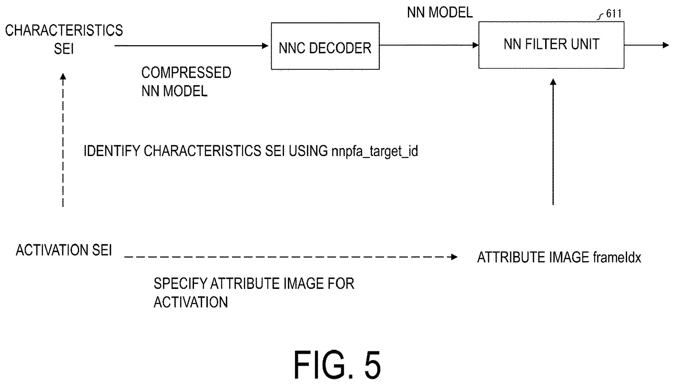

FIG. 5 illustrates a relationship between neural network post-filter characteristics SEI (hereinafter referred to as characteristics SEI, NNPFC_SEI, or characteristics information) and neural network post-filter activation SEI (hereinafter referred to as activation SEI, NNPFA_SEI, activation SEI, or activation information) according to an embodiment of the present invention. An NNC decoder decodes a compressed NN model transmitted using the characteristics SEI to derive an NN model. An NN filter unit 611 performs filtering processing on an attribute image using the derived NN model. Details of the NN filter unit 611 will be described later. The characteristics SEI used for filtering processing is specified by a syntax element, for example an nnpfa_target_id, included in the activation SEI. The activation SEI transmits persistence information using a syntax element and specifies that the attribute image is to be filtered during a persistence specified by the persistence information. The NN filter unit 611 may also include the NNC decoder.

Configuration of 3D Data Decoding Apparatus

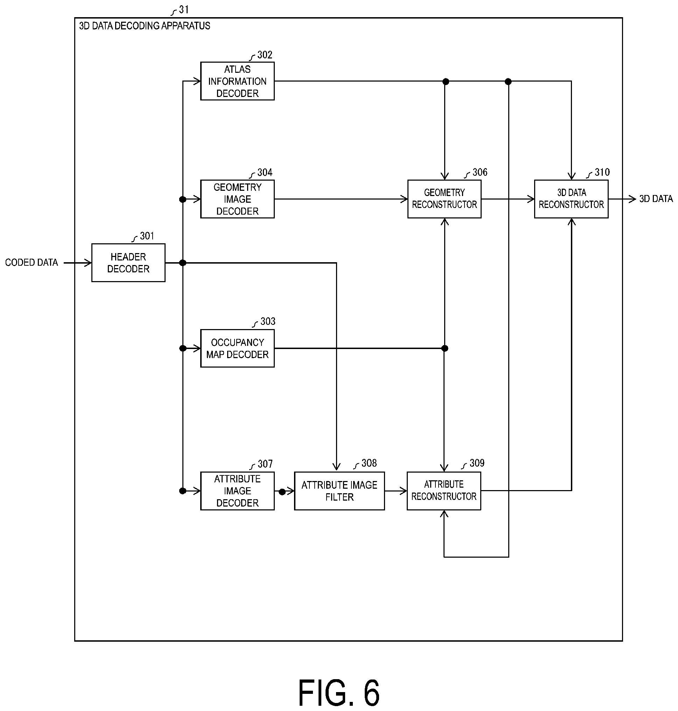

FIG. 6 is a functional block diagram illustrating a schematic configuration of the 3D data decoding apparatus 31 according to an embodiment of the present invention.

The 3D data decoding apparatus 31 includes a header decoder 301, an atlas information decoder 302, an occupancy map decoder 303, a geometry image decoder 304, a geometry reconstructor 306, an attribute image decoder 307, an attribute image filter unit 308, an attribute reconstructor 309, and a 3D data reconstructor 310. Processing performed by the attribute image filter unit 308 may be post-filtering processing.

The header decoder 301 receives coded data multiplexed in a byte stream format, an ISO Base Media File Format (ISOBMFF), or the like and demultiplexes it and outputs a coded atlas information stream, a coded occupancy map stream, a coded geometry image stream, a coded attribute image stream, and filter parameters.

The header decoder 301 decodes characteristics SEI indicating characteristics of post-filtering processing from the coded data. Further, the header decoder 301 decodes activation SEI from the coded data. For example, the header decoder 301 decodes an nnpfc_id and an nnpfc_purpose from the characteristics SEI and decodes an nnpfa atlas_id, an nnpfa_attribute_count, and an nnpfa_cancel_flag from the activation SEI. The header decoder 301 may also decode an nnpfa_target_id, an nnpfa_weight_block_size_idx, an nnpfa_weight_map_width_minus1, an nnpfa_weight_map_height_minus1, an nnpfa_weight_map, an nnpfa strength_block_size_idx, an nnpfa_strength_map_width_minus1, an nnpfa_strength_map_height_minus1, and an nnpfa_strength_map in units of attribute images. The atlas information decoder 302 receives the coded atlas information stream and decodes the atlas information.

The occupancy map decoder 303 decodes a coded occupancy map stream encoded using VVC, HEVC, or the like and outputs an occupancy map.

The geometry image decoder 304 decodes a coded geometry image stream encoded using VVC, HEVC, or the like and outputs a geometry image.

The geometry reconstructor 306 receives the atlas information, the occupancy map, and the geometry image and reconstructs geometries (depth information and position information) in the 3D space.

The attribute image decoder 307 decodes a coded attribute image stream encoded using VVC, HEVC, or the like and outputs an attribute image.

The attribute image filter unit 308 receives an attribute image and filter parameters specified for the attribute image. The attribute image filter unit 308 includes the NN filter unit 611 and performs filtering processing based on the attribute image and filter parameters and outputs a filter-processed image of the attribute image.

The attribute reconstructor 309 receives the atlas information, the occupancy map, and the attribute image and reconstructs attributes (color information) in the 3D space.

The 3D data reconstructor 310 reconstructs point cloud data or mesh data of the 3D data based on the reconstructed geometry information and attribute information.

Attribute Image Filter Unit 308

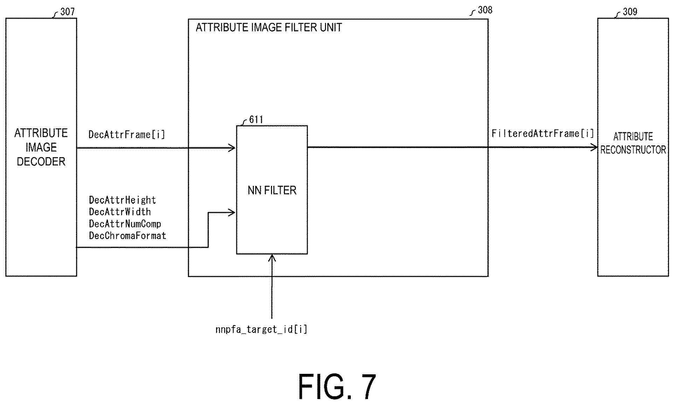

FIG. 7 is a functional block diagram illustrating a configuration of the attribute image filter unit 308. The header decoder 301 decodes an identifier nnpfa_atlas_id indicating target atlas information indicating a post-filter application target from coded data of nn_post_filter_activation SEI (activation SEI). The nnpfa_atlas_id is an identification number used to identify each patch of an attribute image. The nnpfa_atlas_id is set as an atlasID.

The attribute image filter unit 308 uses a neural network to improve the image quality and definition of the image decoded by the attribute image decoder 307. In a case that there are a plurality of attribute images in the atlas information specified by each atlasID, the attribute image filter unit 308 perform filtering processing while switching characteristics SEI or the like in units of attribute images. More specifically, for an attribute image i identified by number i (where i = 0 .. nnpfa_attribute_count-1) among one or more attribute images, the attribute image filter unit 308 performs filtering processing based on characteristics SEI indicated by an TargetId[i]. Specifically, the attribute image filter unit 308 performs processing on the attribute image i in a case that an nnpfa_enabled_flag[i] is 1 and performs no processing on the attribute image i in a case that the nnpfa enabled_flag[i] is 0.

The attribute image filter unit 308 derives the following variables according to DecAttrChromaFormat. DecAttrChromaFormat is a chroma format of the attribute image. SW=SubWidthC = 1, SH=SubHeghtC = 1 (DecAttrChromaFormat == 0) SW=SubWidthC = 2, SH=SubHeghtC = 2 (DecAttrChromaFormat == 1) SW=SubWidthC = 2, SH=SubHeghtC = 1 (DecAttrChromaFormat == 2) SW=SubWidthC = 1, SH=SubHeghtC = 1 (DecAttrChromaFormat == 3)

Here, SW=SubWidthC and SH=SubHeightC indicate the subsampling ratio of chroma to luma components.

The attribute image filter unit 308 performs the following post-filtering processing. This post-processing may be performed only in a case that the attribute image to be filtered is not auxiliary information.

The attribute image filter unit 308 receives DecAttrFrames[attrIdx][partIdx][mapIdx] [frameIdx] [cIdx] [y][x] for each attrIdx, mapIdx, frameIdx, and partIdx and outputs FilteredAttrFrame[attrIdx][cIdx][y][x]. The output is stored in DecAttrFrames [attrIdx][partIdx][mapIdx][frameIdx][cIdx][y][x].

Here, cIdx = 0 .. DecAttrNumComp-1, x = 0 .. DecAttrWidth-1, and y = 0 .. DecAttrHeight-1.

DecAttrFrames[attrIdx][partIdx][mapIdx][frameIdx][cIdx][y][x] is a seven-dimensional array representing the decoded attribute image. The value of each array indicates a pixel value at a component cIdx and a position (x, y). Here, cIdx = 0 .. DecAttrNumComp-1, x = 0 .. DecAttrWidth-1, and y = 0 .. DecAttrHeight-1.

DecAttrHeight[attrIdx][partIdx][mapIdx][frameIdx] is the height of the attribute image patch.

DecAttrWidth[attrIdx][partIdx][mapIdx][frameIdx] is the width of the attribute image patch.

DecAttrNumComp[attrIdx][partIdx][mapIdx][frameIdx] is the number of components in the attribute image.

DecAttrChromaFormat[attrIdx][partIdx][mapIdx][frameIdx] is the chroma format of the attribute image. Here, DecAttrChromaFormat depends on the ChromaFormatIdc of the attribute image and may be, for example, 1(YUV4:2:0) or 3(YUV4:4:4).

In a case that the attribute image includes information other than raw patches and EOM patches which are not auxiliary information, the attribute image filter unit 308 receives DecAttrFrames[attrIdx][cIdx][y][x][partIdx][mapIdx][frameIdx] for each attrIdx, frameIdx, partIdx, and mapIdx and outputs FilteredAttrFrame[attrIdx][cIdx][y] [x] [partIdx] [mapIdx][frameIdx]. FilteredAttrFrame[attrIdx][cIdx][y][x][partIdx][mapIdx][frameIdx] is a seven-dimensional array representing the filtered attribute image. The value of each array indicates a pixel value at a component cIdx and a position (x, y). Here, cIdx = 0 .. DecAttrNumComp-1, x = 0 .. DecAttrWidth-1, and y = 0 .. DecAttrHeight-1.

TargetId[attrIdx][partIdx][mapIdx][frameIdx] indicates the identification number of the characteristics SEI.

DecAttrHeight[attrIdx][partIdx][mapIdx][frameIdx] is the height of the attribute image patch.

DecAttrWidth[attrIdx][partIdx][mapIdx][frameIdx] is the width of the attribute image patch.

DecAttrNumComp[attrIdx][partIdx][mapIdx][frameIdx] is the number of components in the attribute image.

DecAttrChromaFormat[attrIdx][partIdx][mapIdx][frameIdx] is the chroma format of the attribute image. Here, DecAttrChromaFormat depends on the ChromaFormatIdc of the attribute image and may be, for example, 1(YUV4:2:0) or 3(YUV4:4:4).

According to the above configuration, a network model (filter characteristics) to be applied to each attribute image i is individually specified by characteristics SEI, thus achieving the advantage of improving the image quality. Further, it is possible to individually control whether to apply a filter to each attribute image i, thus achieving the advantage of improving the image quality. Namely, a network model and activation and deactivation of a filter are applied in units of attribute images.

NN Filter Unit 611

Neural network models have topologies such as the number of convolutions, the number of layers, kernel sizes, and connection relationships.

Here, a neural network model (hereinafter referred to as an NN model) means elements and connection relationships (a topology) of a neural network and parameters (weights and biases) of the neural network. The NN filter unit 611 may fix the topology and switch only the parameters depending on an image to be filtered.

The attribute image filter unit 308 derives an input InputTensor to the NN filter unit 611 from DecAttrFrames and the NN filter unit 611 performs filtering processing based on the neural network model using the inputTensor. The neural network model used is a model corresponding to an nnpfa_target_id. The input image may be an image for each component or may be an image having a plurality of components as channels.

The NN filter unit 611 may repeatedly apply the following process.

The NN filter unit 611 performs a convolution operation (conv or convolution) on the inputTensor and kernel k[m][n][yy][xx] the same number of times as the number of layers to generate an output image outputTensor to which a bias has been added.

Here, m is the number of channels of inputTensor, n is the number of channels of outputTensor, yy is the height of kernel k, and xx is the width of kernel k.

Each layer generates an outputTensor from an inputTensor.

$$\text{outputTensor[nn][yy][xx]} = \Sigma \Sigma \Sigma (\text{k[mm][nn][i][j]} * \text{inputTensor[mm][yy+j-of][xx+i-of]} + \text{bias[nn]})$$

Here, nn = 0 .. n-1, mm = 0 .. m-1, yy = 0 .. height-1, xx = 0 .. width-1, i = 0 .. yy-1, and j = 0 .. xx-1. "width" is the width of inputTensor and outputTensor and "height" is the height of inputTensor and outputTensor. $\Sigma$ are the sum over mm = 0 .. m-1, i = 0 .. yy-1, and j = 0 .. xx-1. "of" is the width or height of an area required around the inputTensor to generate the outputTensor.

For 1x1 Conv, $\Sigma$ is the sum over mm = 0 .. m-1, i=0, and j=0. Here, of=0 is set. For 3x3 Conv, $\Sigma$ is the sum over mm = 0 .. m-1, i = 0 .. 2, and j = 0 .. 2. Here, of 1 is set.

In a case that the value of yy+j -of is less than 0 or "height" or more or in a case that the value of xx+i-of is less than 0 or "width" or more, the value of inputTensor[mm][yy+j-of][xx+i-of] may be 0. Alternatively, the value of inputTensor[mm][yy+j-of][xx+i-of] may be inputTensor[mm][yclip][xclip]. Here, yclip is max(0, min(yy+j-of, height-1)) and xclip is (0, min(xx+i-of, width-1)).

In the next layer, the obtained outputTensor is used as a new inputTensor and the same process is repeated the same number of times as the number of layers. An activation layer may be provided between layers. Pooling layers or skip connections may be used. An OutAttrFrame is derived from the outputTensor finally obtained.

A process called Depth-wise Conv which is represented by the following equation may also be performed using kernel k'[n][yy][xx]. Here, nn = 0 .. n-1, xx = 0 .. width-1, and yy = 0 .. height-1.

$$\text{outputTensor[nn][yy][xx]} = \Sigma \Sigma (\text{k'[nn][i][j]} * \text{inputTensor[nn][yy+j-of][xx+i-of]} + \text{bias[nn]})$$

Alternatively, a nonlinear process called Activate, for example ReLU, may be used.

$$\text{ReLU(x)} = x \geq 0 ? x : 0$$

Alternatively, leakyReLU indicated in the following formula may be used.

$$\text{leakyReLU(x)} = x \geq 0 ? x : a*x$$

Here, a is a predetermined value less than 1, for example 0.1 or 0.125. To perform integer operations, all values of k, bias, and a described above may be set to integers and a right shift may be performed after conv to generate an outputTensor.

ReLU always outputs 0 for values less than 0 and directly outputs input values of 0 or more. On the other hand, leakyReLU performs linear processing for values less than 0 using a gradient set to a. With ReLU, learning may be difficult to proceed because gradients for values less than 0 are eliminated. LeakyReLU leaves a gradient for values less than 0, making such a problem less likely to occur. Among such leakyReLU(x), PReLU in which the value of a is parameterized may be used.

Basic Configuration of NN Filter

The NN filter unit 611 may include an NN processing unit that performs filtering using NN model parameters based on an NN model.

Operation of Attribute Image Filter Unit 308

The attribute image filter unit 308 derives input data inputTensor[][][] to the NN filter unit 611 based on CroppedPic which is a decoded image DecAttrFrames decoded by the attribute image decoder 307 according to an nnpfc_inp_order_idc. Additionally, StrengthControlVal may be input.

```
for( i = 0; i < numInputPics; i++ ) {
  if( nnpfc_inp_order_idc  ==  0 )
    for( yP = -overlapSize; yP < inpPatchHeight+overlapSize; yP++)
      for( xP = -overlapSize; xP < inpPatchWidth+overlapSize; xP++ ) {
        xIdx = (strengthSizeShift == 0) ? 0 : xP >> strengthSizeShift
        yIdx = (strengthSizeShift == 0) ? 0 : yP >> strengthSizeShift
        inpVal = InpY( InpSampleVal( cTop + yP, cLef + xP, PicHeight,
            PicWidth, CroppedPic[i][0] ) )
        if( !nnpfc_component_last_flag )
          inputTensor[0][i][0][yP+overlapSize][xP+overlapSize] = inpVal
```

```
            else
              inputTensor[0][i][yP+overlapSize][xP+overlapSize][0] = inpVal
            if( nnpfc_auxiliary_inp_idc  = =  1 )
              if( !nnpfc_component_last_flag )
                inputTensor[0][i][1][yP+overlapSize][xP+overlapSize] = StrengthControlVal[
    yIdx][xIdx]
              else
                inputTensor[0][i][yP+overlapSize][xP+overlapSize][1] = StrengthControlVal[
    yIdx][xIdx]
          }
      else if( nnpfc_inp_order_idc  = =  1 )
        for( yP = -overlapSize; yP < inpPatchHeight+overlapSize; yP++)
          for( xP = -overlapSize; xP < inpPatchWidth+overlapSize; xP++ ) {
            inpCbVal = InpC( InpSampleVal( cTop + yP, cLeft + xP, PicHeight / SubHeightC,
                PicWidth / SubWidthC, CroppedPic[i][1] ) )
            inpCrVal = InpC( InpSampleVal( cTop + yP, cLeft + xP, PicHeight / SubHeightC,
                PicWidth / SubWidthC, CroppedPic[i][2] ) )
            if( !nnpfc_component_last_flag ) {
              inputTensor[0][i][0][yP+overlapSize][xP+overlapSize] = inpCbVal
              inputTensor[0][i][1][yP+overlapSize][xP+overlapSize] = inpCrVal
            } else {
              inputTensor[0][i][yP+overlapSize][xP+overlapSize][0] = inpCbVal
              inputTensor[0][i][yP+overlapSize][xP+overlapSize][1] = inpCrVal
            }
            if( nnpfc_auxiliary_inp_idc  = =  1 )
              if( !nnpfc_component_last_flag )
                inputTensor[0][i][2][yP+overlapSize][xP+overlapSize] = StrengthControlVal[
    yIdx][xIdx]
              else
                inputTensor[0][i][yP+overlapSize][xP+overlapSize][2] = StrengthControlVal[
    yIdx][xIdx]
          }
      else if( nnpfc_inp_order_idc  = =  2 )
        for( yP = -overlapSize; yP < inpPatchHeight+overlapSize; yP++)
          for( xP = -overlapSize; xP < inpPatchWidth+overlapSize; xP++ ) {
            yY = cTop + yP
            xY = cLeft + xP
            yC = yY / SubHeightC
            xC = xY / SubWidthC
            inpYVal = InpY( InpSampleVal( yY, xY, PicHeight,
                PicWidth, CroppedPic[i][0] ) )
            inpCbVal = InpC( InpSampleVal( yC, xC, PicHeight / SubHeightC,
                PicWidth / SubWidthC, CroppedPic[i][1] ) )
            inpCrVal = InpC( InpSampleVal( yC, xC, PicHeight / SubHeightC,
                PicWidth / SubWidthC, CroppedPic[i][2] ) )
            if( !nnpfc_component_last_flag ) {
              inputTensor[0][i][0][yP+overlapSize][xP+overlapSize] = inpYVal
              inputTensor[0][i][1][yP+overlapSize][xP+overlapSize] = inpCbVal
              inputTensor[0][i][2][yP+overlapSize][xP+overlapSize] = inpCrVal
            } else {
```

```
              inputTensor[0][i][yP+overlapSize][xP+overlapSize][0] = inpYVal
              inputTensor[0][i][yP+overlapSize][xP+overlapSize][1] = inpCbVal
              inputTensor[0][i][yP+overlapSize][xP+overlapSize][2] = inpCrVal
            }
          if( nnpfc_auxiliary_inp_idc  = =  1 )
            if( !nnpfc_component_last_flag )
              inputTensor[0][i][3][yP+overlapSize][xP+overlapSize] = StrengthControlVal[
yIdx][xIdx]
            else
              inputTensor[0][i][yP+overlapSize][xP+overlapSize][3] = StrengthControlVal[
yIdx][xIdx]
          }
      else if( nnpfc_inp_order_idc  = =  3 )
        for( yP = -overlapSize; yP < inpPatchHeight+overlapSize; yP++)
          for( xP = -overlapSize; xP < inpPatchWidth+overlapSize; xP++ ) {
            yTL = cTop + yP*2
            xTL = cLeft + xP*2
            yBR = yTL + 1
            xBR = xTL + 1
            yC = cTop / 2 + yP
            xC = cLeft / 2 + xP
            inpTLVal = InpY( InpSampleVal( yTL, xTL, PicHeight,
                PicWidth, CroppedPic[i][0] ) )
            inpTRVal = InpY( InpSampleVal( yTL, xBR, PicHeight,
                PicWidth, CroppedPic[i][0] ) )
            inpBLVal = InpY( InpSampleVal( yBR, xTL, PicHeight,
                PicWidth, CroppedPic[i][0] ) )
            inpBRVal = InpY( InpSampleVal( yBR, xBR, PicHeight,
                PicWidth, CroppedPic[i][0] ) )
            inpCbVal = InpC( InpSampleVal( yC, xC, PicHeight / 2,
                PicWidth / 2, CroppedPic[i][1] ) )
            inpCrVal = InpC( InpSampleVal( yC, xC, PicHeight / 2,
                PicWidth / 2, CroppedPic[i][2] ) )
            if( !nnpfc_component_last_flag ) {
              inputTensor[0][i][0][yP+overlapSize][xP+overlapSize] = inpTLVal
              inputTensor[0][i][1][yP+overlapSize][xP+overlapSize] = inpTRVal
              inputTensor[0][i][2][yP+overlapSize][xP+overlapSize] = inpBLVal
              inputTensor[0][i][3][yP+overlapSize][xP+overlapSize] = inpBRVal
              inputTensor[0][i][4][yP+overlapSize][xP+overlapSize] = inpCbVal
              inputTensor[0][i][5][yP+overlapSize][xP+overlapSize] = inpCrVal
            } else {
              inputTensor[0][i][yP+overlapSize][xP+overlapSize][0] = inpTLVal
              inputTensor[0][i][yP+overlapSize][xP+overlapSize][1] = inpTRVal
              inputTensor[0][i][yP+overlapSize][xP+overlapSize][2] = inpBLVal
              inputTensor[0][i][yP+overlapSize][xP+overlapSize][3] = inpBRVal
              inputTensor[0][i][yP+overlapSize][xP+overlapSize][4] = inpCbVal
              inputTensor[0][i][yP+overlapSize][xP+overlapSize][5] = inpCrVal
            }
          if( nnpfc_auxiliary_inp_idc  = =  1 )
            if( !nnpfc_component_last_flag )
```

```
            inputTensor[0][i][6][yP+overlapSize][xP+overlapSize] = StrengthControlVal[
yIdx][xIdx]
              else
              inputTensor[0][i][yP+overlapSize][xP+overlapSize][6] = StrengthControlVal[
yIdx][xIdx]
          }
      }
```

Here, the following configurations may be used.

```
PicHeight=DecAttrHeight
CroppedPic[frameIdx][0] = DecAttrFrames[attrIdx][partIdx][mapIdx][frameIdx][0]
CroppedPic[frameIdx][1] = DecAttrFrames[attrIdx][partIdx][mapIdx][frameIdx][1]
CroppedPic[frameIdx][2] = DecAttrFrames[attrIdx][partIdx][mapIdx][frameIdx][2]
BitDepthY = BitDepthC = DecAttrBitDepth
ChromaFormatIdc = DecAttrChromaFormat
nnFilterWeight = nnFilterMap[attrIdx][partIdx][mapIdx][frameIdx]
StrengthControlVal = StrengthMap[attrIdx][partIdx][mapIdx][frameIdx]
```

Here, nnFilterMap[attrIdx][partIdx][mapIdx][frameIdx] which will be described later may be used for nnFilterWeight. Similarly, StrengthMap[attrIdx][partIdx][mapIdx][frameIdx] which will be described later may be used for StrengthControlVal. Namely, a strength indicated by StrengthMap[attrIdx][partIdx][mapIdx][frameIdx][yIdx][xIdx] may be input as one channel of the input tensor.

Functions Reflect(x, y) and Wrap(x, y) are defined as follows.

$$
\begin{aligned}
&\text{Reflect(x, y)} \\
&= \text{Min}(-y,\ x) \quad (\text{if } y < 0) \\
&= \text{Min}(x-(y-x),\ x) \quad (\text{if } y > x) \\
&= y \quad (\text{Otherwise})
\end{aligned}
$$

$$
\begin{aligned}
&\text{Wrap(x, y)} \\
&= \text{Max}(0,\ x+y+1) \quad (\text{if } y < 0) \\
&= \text{Min}(x,\ y-x-1) \quad (\text{if } y > x) \\
&= y \quad (\text{Otherwise})
\end{aligned}
$$

This is derived using inpTensorBitDepth = nnpfc_inp_tensor_bitdepth_minus8+8.

The NN filter unit 611 performs NN filtering processing and derives an outputTensor from the inputTensor. Filtering processing represented by PostProcessingFilter() may also be performed in units of patch sizes (inpPatchWidth x inpPatchHeight) as described below.

According to the value of nnpfc_out_order_idc, the decoded image is filtered by post-filtering processing PostProcessingFilter() as follows to generate Y, Cb, and Cr pixel arrays FilteredPic[0], FilteredPic[1], and FilteredPic[2].

The post-filtering processing PostProcessingFilter() of the decoded image is as follows.

```
if(nnpfc_inp_order_idc==0)
  for(cTop=0;cTop<InpPicHeightInLumaSamples;cTop+=inpPatchHeight)
    for(cLeft=0;cLeft<InpPicWidthInLumaSamples;cLeft+=inpPatchWidth){
      DeriveInputTensors()
      outputTensor=PostProcessingFilter(inputTensor)
      StoreOutputTensors()
    }
  else if(nnpfc_inp_order_idc==1)
    for(cTop=0;cTop<InpPicHeightInLumaSamples/SubHeightC;
```

```
              cTop+=inpPatchHeight)
        for(cLeft=0;cLeft<InpPicWidthInLumaSamples/SubWidthC;
           cLeft+=inpPatchWidth){
           DeriveInputTensors()
           outputTensor=PostProcessingFilter(inputTensor)
           StoreOutputTensors()
        }
   else if(nnpfc_inp_order_idc==2)
      for(cTop=0;ctop<InpPicHeightInLumaSamples;cTop+=inpPatchHeight)
        for(cLeft=0;cLeft<InpPicWidthInLumaSamples;cLeft+=inpPatchWidth){
           DeriveInputTensors()
           outputTensor=PostProcessingFilter(inputTensor)
           StoreOutputTensors()
        }
   else if(nnpfc_inp_order_idc==3)
      for(cTop=0;cTop<InpPicHeightInLumaSamples;cTop+=inpPatchHeight*2)
        for(cleft=0;cLeft<InpPicWidthInLumaSamples:cLeft+=inpPatchWidth*2){
           DeriveInputTensors()
           outputTensor=PostProcessingFilter(inputTensor)
           StoreOutputTensors() }
```

Here, DeriveInputTensors() is a function representing input data configuration and StoreOutputTensors() is a function representing output data storage. InpWidth and InpHeight are the size of input data and may be DecAttrWidth and DecAttrHeight. inpPatchWeight and inpPatchHeight are the width and height of a patch.

The attribute image filter unit 308 derives an output image OutAttrFrame from a three-dimensional array of NN output data outputTensor[] [] [] which is output data of the NN filter unit 611.

The attribute image filter unit 308 may derive the output image OutAttrFrame using the following pseudo code.

Here, i is an integer indicating the output order of frames. for(i=0; i<numInputPics; i++) { if(nnpfc_out_order_idc==0) for (yP=0; yP<outPatchHeight; yP++) for(xP=0; xP<outPatchWidth; xP++) i yY = cTop * outPatchHeight / inpPatchHeight + yP xY = cLeft * outPatchWidth / inpPatchWidth + xP if (yY<nnpfc_pic_height_in_luma_samples && xY<nnpfc_pic_width_in_luma_samples) if(!nnpfc_component_last_flag) FilteredPic[i][O][yY][xY] = outputTensor[0][i][0][yP][xP] else FilteredPic[i][0][yY][xY]= outputTensor[0][i][yP][xP][0] } else if(nnpfc_out_order_idc==1) for(yP=0; yP<outPatchCHeight; yP++) for(xP=0; xP<outPatchCWidth; xP++) { xSrc = cLeft * horCScaling + xP ySrc = cTop * verCScaling + yP if (ySrc<nnpfc_pic_height_in_luma_samples / outSubHeightC && xSrc<nnpfc_pic_width_in_luma_samples / outSubWidthC) if(!nnpfc_component_last_flag) { FilteredPic[i][1][ySrc][xSrc] = outputTensor[0][i][0][yP][xP]     FilteredPic[i][2][ySrc][xSrc] = outputTensor[0][i][1][yP][xP] }     else { FilteredPic[i][1][ySrc][xSrc] = outputTensor[0][i][yP][xP][0] FilteredPic[i][2][ySrc][xSrc] = outputTensor[0][i][yP][xP][1] } } else if(nnpfc_out_order_idc==2) for(yP=0; yP<outPatchHeight; yP++) for(xP=0; xP<outPatchWidth; xP++) { yY = cTop*outPatchHeight / inpPatchHeight + yP xY = cLeft*outPatchWidth / inpPatchWidth + xP yC = yY / outSubHeightC xC = xY / outSubWidthC yPc = (yP/outSubHeightC)*outSubHeightC xPc = (xP/outSubWidthC)*outSubWidthC if (yY<nnpfc_pic_height_in_luma_samples                   &&                   xY<nnpfc_pic_width_in_luma_samples) if(nnpfc_component_last_flag==0){ filteredPic[i][0][yY][xY] = OutY(outputTensor[i][0][0][yP][xP]) FilteredPic[i][1][yC][xC] = OutC(outputTensor[i][0][1][yPc][xPc]) FilteredPic[i][2][yC][xC] = OutC(outputTensor[i][0][2][yPc][xPc]) } else { FilteredPic[i][0][yY][xY][yY][xY] = OutY( outputTensor[i][0][yP][xP][0]) FilteredPic[i][1][yC][xC] = OutC(outputTensor[i][0][yPc][xPc][1]) FilteredPic[i][2][yC][xC] = OutC(outputTensor[i][0][yPc][xPc][2]) } } else if(nnpfc_out_order_idc==3) for(yP=0; yP<outPatchHeight; yP++) for( xP = 0; xP < outPatchWidth; xP++ ) { ySrc = cTop / 2*outPatchHeight / inpPatchHeight + yP xSrc = cLeft / 2*outPatchWidth / inpPatchWidth + xP if (ySrc<nnpfc_pic_height_in_luma_samples/2 && xSrc<nnpfc_pic_width_in_luma_samples/2) if(nnpfc_component_last_flag==0) { FilteredPic[i][0][xSrc*2][ySrc*2] = OutY(outputTensor[i][0][0][yP][xP]) FilteredPic[i][0][xSrc*2+1][ySrc*2] = OutY(outputTensor[i][0][1][yP][xP]) FilteredPic[i][0][xSrc*2][ySrc*2+1] = OutY(outputTensor[i][0][2][yP][xP]) FilteredPic[i][0][xSrc*2+1][ySrc*2+1] = OutY(outputTensor[i][0][3][yP][xP] ) FilteredPic[i][1][xSrc][ySrc] = OutC(outputTensor[i][0][4][yP][xP]) FilteredPic[i][2][xSrc][ySrc] = OutC(outputTensor[i][0][5][yP][xP]) } else { FilteredPic[i][0][xSrc**2][ySrc*2] = OutY(outputTensor[i][0][yP][xP][0]) FilteredPic[i][0][xSrc*2+1][ySrc*2] = OutY(outputTensor[i][0][yP][xP][1]) FilteredPic[i][0][xSrc*2][ySrc*2+1] = OutY(outputTensor[i][0][yP][xP][2]) FilteredPic[i][0][xSrc*2+1][ySrc*2+1] = OutY(outputTensor[i][0][yP][xP][3] ) FilteredPic[i][1][xSrc][ySrc] = OutC(outputTensor[i][0][yP][xP][4]) FilteredPic[i][2][xSrc][ySrc] = OutC(outputTensor[i][0][yP][xP][5]) } } } OutAttrFrame = FilteredPic

The filtered image synthesizer 612 combines CroppedPic (=DecAttrFrames) and OutAttrFrame based on the value of nnFilterWeight decoded from coded data of activation SEI corresponding to the attribute image i and outputs FilteredAttrFrame.

Each pixel of FilteredAttrFrame is derived as follows.

$$\text{FilteredAttrFrame[cIdx][y][x]} = (\text{nnFilterWeight[yIdx][xIdx]} * \text{OutAttrFrames}$$
$$\text{[cIdx][y][x]} + ((1 \ll \text{shift}) - \text{nnFilterWeight[yIdx][xIdx]}) * \text{CroppedPic[cIdx][y][x]}$$
$$) + \text{offset}) \gg \text{shift}$$

Here, cIdx = 0 .. DecAttrNumComp-1, x = 0 .. DecAttrWidth-1, and y = 0 .. DecAttrHeight-1. Alternatively, the following configurations may be used.

$$\text{xIdx} = (\text{weightSizeShift==0}) \; ? \; 0 \; : \; (\text{x} \gg \text{weightSizeShift})$$

$$\text{yIdx} = (\text{weightSizeShift==0}) \; ? \; 0 \; : \; (\text{y} \gg \text{weightSizeShift})$$

$$\text{shift=6}$$

$$\text{offset=1} \ll (\text{shift-1})$$

This is the size of a two-dimensional map nnFilterWeight indicating the weighting coefficient of the filter of the attribute image i in the target attribute image.

The attribute image filter unit 308 outputs FilteredAttrFrame.

According to the above configuration, the degree to which characteristics SEI and an NN model, according to the frame features, and activation SEI are individually applied to each attribute image i is changed, thus achieving the advantage of improving the image quality. In a case that processing is switched according to features of each frame, activation SEI that persists in units of Picture Units (PUs) (which is defined as follows) may be decoded. A PU is a set of NAL units including all Video Coding Layer (VCL) NAL units of a coded picture and related non-VCL NAL units. A VCL NAL is a NAL including slices that are parts of a picture. This SEI message is a message that is decoded and applied with an attribute image of each CVS (or PU).

Decoding of Activation SEI and Application of Filter

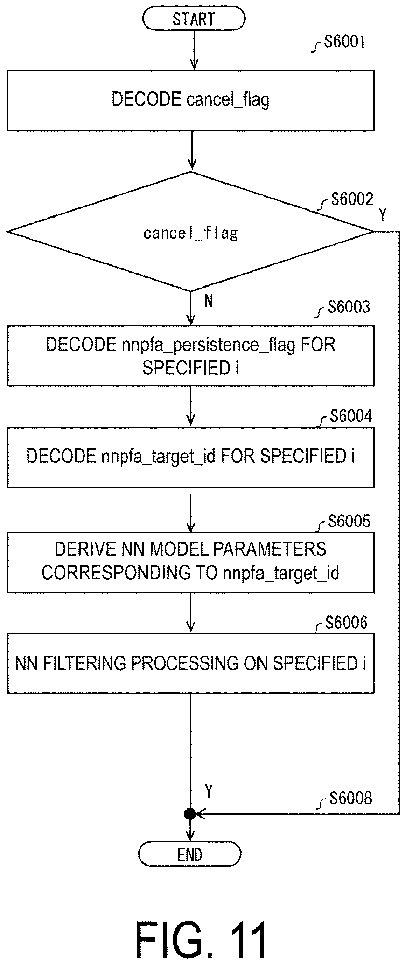

FIG. 11 is a diagram illustrating a flowchart of a process performed by the 3D data decoding apparatus. The 3D data decoding apparatus performs the following process including decoding of an activation SEI message.

S6001: The header decoder 301 decodes a cancel_flag from activation SEI.

S6002: In a case that the cancel_flag is 1, the process ends for an attribute image for which the cancel_flag is targeted. In a case that the cancel_flag is 0, the process proceeds to S6003.

S6003: The header decoder 301 decodes an nnpfa_persistence_flag for the attribute image i from the activation SEI.

S6004: The header decoder 301 decodes an nnpfa_target_id for the attribute image i from the activation SEI.

S6005: The header decoder 301 identifies characteristics SEI having the same nnpfc_id as the nnpfa_target_id and derives parameters of an NN model from the characteristics SEI.

S6006: The NN filter unit 611 performs filtering processing using the derived parameters of the NN model.

Example Configurations of Syntax

Neural Network Post-Filter Characteristics SEI

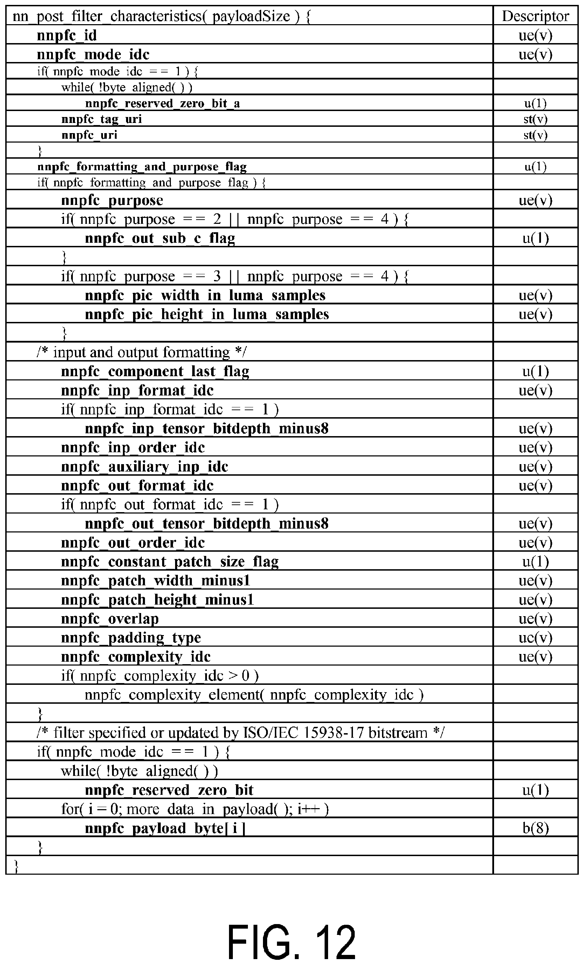

FIG. 12 shows a syntax of nn_post_filter_characteristics(payloadSize) (characteristics SEI). The argument payloadSize represents the number of bytes of this SEI message.

A Persistence scope to which the characteristics SEI is applied is a Coded Video Sequence (CVS). Namely, characteristics SEI is SEI applied to each CVS. Here, a CVS refers to a set of one or more access units starting with a randomly accessible access unit such as Intra Random Access Pictures (IRAP) or Gradual Decoder Refresh (GDR). An access unit includes pictures displayed at the same time. IRAP may be any one of Instantaneous Decoder Refresh (IDR), Clean Random Access (CRA), or Broken Link Access (BLA) access units.

In this characteristics SEI, the following syntax is encoded, decoded, and transmitted.

The width and height of a decoded image are in units of luma pixels and are here represented as InpPicWidthIn-LumaSamples and InpPicHeightInLumaSamples, respectively.

```
InpPicWidthInLumaSamples = pps_pic_width_in_luma_samples - SubWidthC * (pps_c
onf_win_left_offset + pps_conf_win_right_offset)

  InpPicHeightInLumaSamples = pps_pic_height_in_luma_samples - SubHeightC * (pp
s_conf_win_top_offset + pps_conf_win_bottom_offset)
```

It is assumed that decoded images are a two-dimensional array of luma pixels with vertical coordinate y and horizontal coordinate x CroppedPic[0][y][x] and two-dimensional arrays of chroma pixels CroppedPic[1][y][x] and CroppedPic[2][y][x]. Here, it is assumed that the coordinates y and x of an upper left corner of a pixel array are 0 and 0, respectively.

Let BitDepthY be the luma pixel bit-depth of the decoded image. Let BitDepthC be the chroma pixel bit-depth of the decoded image. Both BitDepthY and BitDepthC are set equal to BitDepth.

Let a variable SubWidthC be the chroma to luma subsampling ratio in a horizontal direction of the decoded image and a variable SubHeightC be the chroma to luma subsampling ratio in a vertical direction of the decoded image. The variable SubWidthC is set equal to a variable SubWidthC of the coded data. The variable SubHeightC is set equal to a variable SubHeightC of the coded data.

A variable SliceQPY is set equal to a quantization parameter SliceQpY which is updated at the slice level of the coded data.

Each of a variable outSubWidthC and a variable outSubHeightC is derived using an nnpfc_out_sub_c_flag. In a case that the nnpfc_out_sub_c_flag is 1, it indicates that outSubWidthC = 1 and outSubHeightC = 1. In a case that the nnpfc_out_sub_c_flag is 0, it indicates that outSubWidthC = 2 and outSubHeightC = 1. In a case that there is no nnpfc_out_sub_c_flag, it is inferred that outSubWidthC = SubWidthC and outSubHeightC = SubHeightC. outSubWidthC and outSubHeightC are the subsampling ratios of chroma to luma components.

```
 if (nnpfc_out_sub_c_flag is not present) {
   outSubWidthC= SubWidthC
   outSubHeightC= SubWidthC
 I else if (nnpfc_out_sub_c_flag == 1) {
   outSubWidthC= 1
   outSubHeightC= 1
 } else {
   outSubWidthC- 2
   outSubHeightC= 1 }
```

A requirement for bitstream compliance is that both outSubWidthC and outSubHeightC be greater than 0.

A syntax element nnpfc_pic_width_in_luma_samples and a syntax element nnpfc_pic_height_in_luma_samples respectively specify the width and height of a luma pixel array of an image obtained by applying post-filtering processing identified by an nnpfc_id to a decoded image. When nnpfc_pic_width_in_luma_samples and nnpfc_pic_height_in_luma_samples are not present, it is inferred that they are equal to InpPicWidthInLumaSamples and InpPicHeightInLumaSamples, respectively.

A syntax element nnpfc_component_last_flag having a value of 0 specifies that the second dimension of an input tensor inputTensor is used for post-filtering processing and an output tensor outputTensor generated from post-filtering processing is used for the channel.

The nnpfc_component_last_flag having a value of 1 specifies that the last dimension of the input tensor is used for post-filtering processing and the output tensor outputTensor generated from post-filtering processing is used for the channel.

A syntax element nnpfc_inp_format_idc indicates a method for converting pixel values of a decoded image into input values to the post-filtering processing. In a case that the value of nnpfc_inp_format_idc is 0, each input value to the post-filtering processing is in a floating point format specified in IEEE754 and functions InpY and InpC are specified as follows.

$$InpY(x)=x \div ((1<<BitDepthY)-1)$$

$$InpC(x)=x \div ((1<<BitDepthC)-1)$$

In a case that the value of nnpfc_inp_format_idc is 1, each input value to the post-filtering processing is an unsigned integer and the functions InpY and InpC are specified as follows.

```
shift=BitDepthY-inpTensorBitDepth
if(inpTensorBitDepth>=BitDepthY)
  InpY(x)=x<<(inpTensorBitDepth-BitDepthY) else
  InpY(x)=Clip3(0, (1<<inpTensorBitDepth)-1, (x+(1<<(shift-1)))>>shift)
shift=BitDepthC-inpTensorBitDepth
if(inpTensorBitDepth>=BitDepthC)
  InpC(x)=x<<(inpTensorBitDepth-BitDepthC)
else
  InpC(x)=Clip3(0, (1<<inpTensorBitDepth)-1, (x+(1<<(shift-1)))>>shift)
```

A variable inpTensorBitDepth is obtained from the syntax element nnpfc_inp_tensor_bitdepth_minus8 which will be described later.

A value obtained by adding 8 to the value of the syntax element nnpfc_inp_tensor_bitdepth_minus8 indicates the pixel bit-depth of luma pixel values of an input integer tensor. The value of the variable inpTensorBitDepth is derived as follows.

$$inpTensorBitDepth=nnpfc\_inp\_tensor\_bitdepth\_minus8+8$$

A syntax element nnpfc_inp_order_idc indicates how to order the pixel array of the decoded image as an input to the post-filtering processing. The semantics of nnpfc_inp_order_idc which ranges from 0 to 3 specifies a process for deriving an input tensor inputTensor for each value of nnpfc_inp_order_idc. A vertical pixel coordinate cTop and a horizontal pixel coordinate cLeft specify an upper left pixel position of a pixel patch included in the input tensor.

A patch is a rectangular array of pixels from a component of an image (such as luma and chroma components).

In a case that a syntax element nnpfc_constant_patch_size_flag is 0, it indicates that the post-filtering processing receives a patch size that is a positive integer multiple of a patch size indicated by nnpfc_patch_width_minus1 and nnpfc_patch_height_minus1 as an input. In a case that nnpfc_patch_width_minus1 is 1, it indicates that the post-filtering processing receives the patch size indicated by nnpfc_patch_height_minus 1 as an input.

A value obtained by adding 1 to the value of the syntax element nnpfc_patch_width_minus1 indicates the number of horizontal pixels of the patch size required for input to the post-filtering processing in a case that the value of nnpfc_constant_patch_size_flag is 1. In a case that the value of nnpfc_constant_patch_size_flag is 0, any positive integer multiple of (nnpfc_patch_width_minus1+1) can be used as the number of horizontal pixels of the patch size used as an input to the post-filtering processing.

A value obtained by adding 1 to the syntax element nnpfc_patch_height_minus 1 indicates the number of vertical pixels of the patch size required for input to the post-filtering processing in a case that the value of nnpfc_constant_patch_size_flag is 1. In a case that the value of nnpfc_constant_patch_size_flag is 0, any positive integer multiple of

(nnpfc_patch_height_minus1+1) can be used as the number of vertical pixels of the patch size used as an input to the post-filtering processing.

A syntax element nnpfc_overlap specifies the number of horizontal and vertical pixels over which adjacent input tensors overlap. The value of nnpfc_overlap needs to be 0 or more and 16383 or less.

Variables inpPatchWidth, inpPatchHeight, outPatchWidth, outPatchHeight, horCScaling, verCScaling, outPatchCWidth, outPatchCHeight, and overlapSize are derived as follows.

```
inpPatchWidth=nnpfc_patch_width_minus1+1
inpPatchHeight=nnpfc_patch_height_minus1+1
outPatchWidth=(nnpfc_pic_widthin_luma_samples*inpPatchWidth)
                             /InpPicWidthInLumaSamples
outPatchHeight=(nnpfc_pic_height_in_luma_samples*inpPatchHeight)
                             /InpPicHeightInLumaSamples
```

```
horCScaling=SubWidthC/outSubWidthC
verCScaling=SubHeightC/outSubHeightC
outPatchCWidth=outPatchWidth*horCScaling
outPatchCHeight=outPatchHeight*verCScaling
overlapSize=nnpfc_overlap
```

A syntax element nnpfc_padding_type specifies a process for padding when referring to pixel positions outside the boundary of the decoded image.

The value of nnpfc_padding_type needs to be 0 or more and 15 or less.

In a case that the value of nnpfc_padding_type is 0, the values of the pixel positions outside the boundary of the decoded image are assumed to be 0.

In a case that the value of nnpfc_padding_type is 1, the values of the pixel positions outside the boundary of the decoded image are assumed to be the boundary values.

In a case that the value of nnpfc_padding_type is 2, the values of the pixel positions outside the boundary of the decoded image are assumed to be values that are specularly reflected from the boundary values. In order to define the values more precisely, a function InpSampleVal is defined. A function InpSampleVal(y, x, picHeight, picWidth, Pic) receives a vertical pixel position y, a horizontal pixel position x, an image height picHeight, an image width picWidth, and a pixel array croppedPic as inputs and returns a value of sampleVal derived as follows.

```
InpSampleVal(y, x, picHeight, picWidth, Pic) {
i f (nnpfc_padding_type==0)
  if(y<0 ‖ x<0 ‖ y>=picHeight ‖ x>=picWidth)
    sampleVal = 0
  else
    sampleVal = Pic[y][x]
else if(nnpfc_padding_type==1)
  sampleVal = Pic[Clip3(0, picHeight-1, y)][Clip3(0, picWidth-1, x)]
else /*nnpfc_padding_type==2*/
  sampleVal = Pic [Reflect(picHeight-1, y)][Reflect(picWidth-1, x)]
  return sampleVal }
```

A syntax element nnpfc_complexity_idc indicates that there may be one or more syntax elements indicating the complexity of post-filtering processing associated with the nnpfc_id. In a case that the value of nnpfc_complexity_idc is 0, it indicates that there is no syntax element indicating the complexity of post-filtering processing associated with the nnpfc_id.

A syntax element nnpfc_auxiliary_inp_idc indicates whether there is additional data for inputTensor. In a case that the value of nnpfc_auxiliary_inp_idc is 0, there is no additional data, and in a case that the value is greater than 0, additional data is input to inputTensor.

In a case that the syntax element nnpfc _out_format_idc is 0, it indicates that a pixel value output by post-filtering processing is a floating point value specified in IEEE754-2019. Functions OutY and OutC that convert luma pixel values and chroma pixel values output by post-processing into integer values of pixel bit-depths are specified as follows using the pixel bit-depths BitDepthY and BitDepthC, respectively.

$$OutY(x)=Clip3(0, (1<<BitDepthY)-1, Round(x*((1<<BitDepthY)-1)))$$

$$OutC(x)=Clip3(0, (1<<BitDepthC)-1, Round(x*((1<<BitDepthC)-1)))$$

In a case that the value of nnpfc_out_format_idc is 1, it indicates that the pixel value output by the post-filtering processing is an unsigned integer. Functions OutY and OutC are specified as follows.

```
shift=outTensorBitDepth-BitDepthY
if(outTensorBitDepth>=BitDepthY)
   OutY(x)=Clip3(0, (1<<BitDepthY)-1, (x+(1<<(shift-1)))>>shift)
else
   OutY(x)=x<<(BitDepthY-outTensorBitDepth)
shift=outTensorBitDepth-BitDepthC
if(outTensorBitDepth>=BitDepthC)
   OutC(x)=Clip3(0, (1<<BitDepthC)-1, (x+(1<<(shift-1)))>>shift)
```

```
else
  OutC(x)=x<<(BitDepthC-outTensorBitDepth)
```

A variable outTensorBitDepth is derived from a syntax element nnpfc_out_tensor_bitdepth_minus8 which will be described later.

nnpfc_out_tensor_bitdepth _minus8+8 specifies the pixel bit-depth of pixel values of an output integer tensor. The value of outTensorBitDepth is derived as follows.

$$outTensorBitDepth = nnpfc\_out\_tensor\_bitdepth\_minus8+8$$

nnpfc_out_order_idc defines the output order of pixels obtained from post-filtering processing. The semantics of nnpfc_out_order_idc with a value of 0 or more and 3 or less is defined.

A syntax element nnpfc_reserved_zero_bit needs to be equal to 0.

A syntax element nnpfc_payload _byte[i] contains the i-th byte of an ISO/IEC 15938-17 compliant bitstream. All nnpfc_payload _bytes[i] need to be those of an ISO/IEC 15938-17 compliant bitstream.

Neural Network Post-Filter Activation SEI

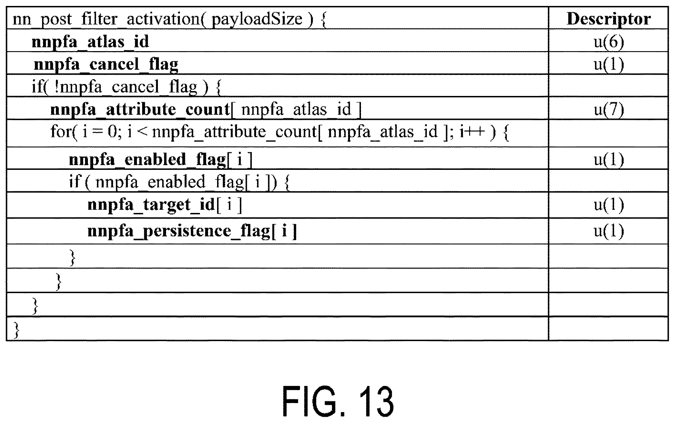

FIG. 13 shows an example configuration of a syntax of activation SEI.

For this activation SEI, the header decoder 301, an atlas information coder 102, a geometry image coder 106, and an attribute image coder 109 decode and encode the following syntax. The header decoder 301 decodes an nnpfa_atlas_id from the coded data and sets the nnpfa_atlas_id as an atlasID.

The nnpfa atlas_id is an identification number (ID) of an atlas to which the activation SEI is applied.

The nnpfa_cancel_flag is a cancel flag. In a case that the nnpfa_cancel_flag is 1, it indicates that maintenance of a neural-network-based post-filter that has been configured for attribute images of an atlas indicated by the atlasId in already decoded NNPFA SEI is to be canceled. In a case that the nnpfa_cancel_flag is 0, it indicates that an nnpfa_attribute_count is to be transmitted, encoded, and decoded.

The nnpfa attribute_count represents the number of attribute images indicated by the nnpfa_atlas_id. A plurality of attribute images included in the coded data are identified by a number i from 0 to nnpfa_attribute_count-1.

An nnpfa_enabled_flag[i] is decoded for each attribute image. The nnpfa enabled_flag[i] indicates whether to perform post-filtering based on a neural network indicated by the characteristics SEI on the attribute image i. In a case that the value of the nnpfa enabled_flag[i] is 1, post-filtering based on the neural network is performed, and in a case that the value is 0, it is not performed.

An nnpfa_target_id[i] indicates the id of the characteristics SEI applied to the attribute image i. Post-filtering processing specified by the characteristics SEI having the same nnpfc_id as the nnpfa_target_id is applied to the attribute image i.

An nnpfa_persistence_flag[i] indicates the maintenance information (persistence information) of the target neural network post-filter. In a case that the nnpfa_persistence_flag[i] is 0, it indicates that the target neural network post-filter is applied only to the current coded atlas frame. In a case that the nnpfa_persistence_flag[i] is 1, it indicates that the target neural network post-filter indicated by the nnpfa_target_id[i] is applied to the current picture and all subsequent pictures until one of the following conditions is met:

· A new CAS starts;
· A bitstream ends; and
· A coded atlas unit associated with an NNPF A SEI message having the same nnpfa_target_id as the current SEI message and an nnpfa_cancel_flag[i] are output following the current picture in output order.

CAS is an abbreviation for coded atlas sequence and is a sequence of coded atlas access units in decoding order. More specifically, a CAS is a sequence that starts with an IRAP coded atlas access unit with NoOutputBeforeRecoveryFlag==1, followed by coded atlas access units with other than NoOutputBeforeRecoveryFlag==1. An IRAP coded atlas access unit may be an instantaneous decoding refresh (IDR) coded access unit, a broken link access (BLA) coded access unit, or a clean random access (CRA) coded access unit.

The header decoder 301 decodes an nnpfa_atlas_id and an nnpfa_cancel_flag. Then, in a case that the nnpfa_cancel _flag is 0, the header decoder 301 decodes a nnpfa attribute _count for the nnpfa_atlas_id and decodes an nnpfa enabled _flag[i] for the attribute image i using a loop variable i (=attrIdx) from i = 0 .. nnpfa_attribute_count-1. Further, in a case that the nnpfa _enabled _flag[i] is not 0, the header decoder 301 decodes an nnpfa_target_id[i] and an nnpfa_persistence_flag[i] for the attribute image i.

According to the above configuration, a 3D data decoding apparatus for decoding coded data and decoding 3D data including attribute information includes a header decoder configured to decode characteristics information of a neural network post-filter and activation information of the neural network post-filter from the coded data, an attribute image decoder configured to decode an attribute image from the coded data, and an attribute image filter unit configured to perform filtering processing of the attribute image, wherein the header decoder is configured to decode an atlas identifier, identification information of the characteristics information, a cancel flag, and persistence information from the activation information.

This achieves the advantage that post-filtering processing of the neural network can be canceled in units of attribute images. Further, the header decoder is set to decode a cancel flag for filtering processing for the atlas identifier. This achieves the advantage that post-filtering processing of the neural network can be canceled in units of atlas and attribute images in three-dimensional space data that can have a plurality of atlases.

The following application process may be performed using a variable ActivateNNPF that indicates whether to apply a neural network post-filter to a decoded attribute video frame. More specifically, the following process is performed in a case that activation SEI is decoded.

For attrIdx = 0 .. nnpfa_attribute_count[nnpfa_atlas_id]-1, in a case that nnpfa_enabled_flag[i] == 1 and target_cancel_flag[attrIdx] == 0, ActivateNNPF [attrIdx] [partIdx] [mapIdx][frameIdx][nnpfa_target_id[attrIdx]]=2 (NNPF_ACTIVATE) is set.

Otherwise, in a case that nnpfa enabled _flag[i] == 0 or that target_cancel _flag[attrIdx] == 0, ActivateNNPF [attrIdx] [partIdx] [mapIdx][frameIdx][nnpfa_target_id[attrIdx]]=-1 (NNPF_CANCEL) is set.

Next, when an attribute frame (or an atlas) is decoded, ActivateNNPF[attrIdx][partIdx][mapIdx][frameIdx][nnpfa_target_id[attrIdx]] is updated as follows.

In a case that ActivateNNPF [attrIdx] [partIdx][mapIdx][frameIdx][nnpfa_target_id[attrIdx]] == 2, ActivateNNPF [attrIdx][partIdx][mapIdx][frameIdx][nnpfa_target_id[attrIdx]]=1 (NNPF _APPLY) is set. Otherwise, in a case that ActivateNNPF [attrIdx] [partIdx][mapIdx][frameIdx][nnpfa_target_id[attrIdx]] == -1, ActivateNNPF [attrIdx][partIdx][mapIdx][frameIdx][nnpfa_target_id[attrIdx]]=0 (NNPF NOAPPLY) is set.

Otherwise, the value of ActivateNN[attrIdx][partIdx][mapIdx][lastFrameIdx][nnpfaIdx] of a previous frame in the output order (a frame indicated by a lastFrameIdx) is copied to ActivateNN[attrIdx][partIdx][mapIdx][lastFrameIdx][nnpfaIdx] of a current frameIdx. That is, ActivateNNPF [attrIdx][partIdx][mapIdx][frameIdx][nnpfaIdx]=ActivateNN[attrIdx][partIdx][ mapIdx][lastFrameIdx][nnpfaIdx] is set. Here, lastFrameIdx = frameIdx.

The reason for distinguishing between NNPF_ACTIVATE and NNPF _APPLY is that while they both apply a post-filter, ActivateNNPF is updated based on the value of ActivateNNPF of the previous lastFrameIdx in the case of NNPF _APPLY, but ActivateNNPF is set to a value regardless of the value of the previous lastFrameIdx in the case of

NNPF ACTIVATE.

In a case that ActivateNN[attrIdx] [partIdx][mapIdx][frameIdx][nnpfaIdx] == 1 for an nnpfaIdx, a post-filter is applied to decoded attribute frames DecAttrFrames[attrIdx] [partIdx][mapIdx][frameIdx][nnpfaIdx] using characteristics SEI having the same nnpfc_id as the nnpfaIdx.

Here, the following relationship is used.

```
DecFrames = DecAttrFrames[attrIdx][partIdx][mapIdx][frameIdx][nnfpaIdx]
StrengthControlVal = StrengthMap[attrIdx][partIdx][mapIdx][frameIdx]
nnFilterWeight = nnFilterMap[attrIdx][partIdx][mapIdx][frameIdx]
PicWidth = DecAttrWidth
PicHeight = DecAttrHeight
CroppedPic[cIdx] = DecAttrFrames[attrIdx][partIdx][mapIdx][frameIdx][cIdx]
BitDepthY = BitDepthC = DecAttrBitDepth
ChromaFormatIdc = DecAttrChromaFormat
```

Another Example 1 of Activation SEI

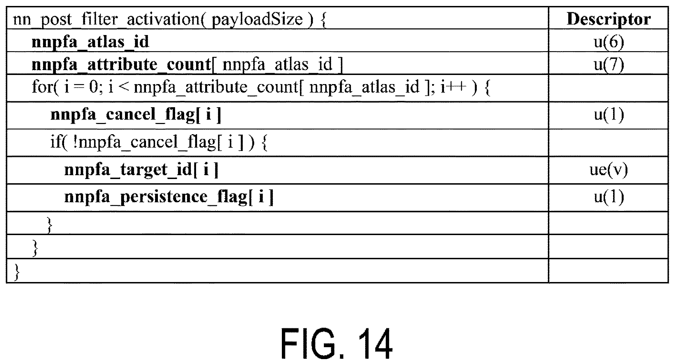

FIG. 14 shows another example configuration of a syntax of activation SEI. i is a value for identifying each attribute image included in a target atlas indicated by an nnpfa_atlas_id, where i = attrIdx. Here, a cancel flag nnpfa_cancel_flag[i] has the following meaning.

The nnpfat_cancel_flag[i] being 1 indicates that maintenance of a neural-network-based post-filter set for the atlasId and the attribute image i in previous NNPF A SEI is to be canceled. The nnpfa_cancel_flag[i] being 0 indicates that a subsequent syntax is to be transmitted, encoded, and decoded.

The header decoder 301 decodes an nnpfa atlas_id, decodes an nnpfa_attribute_count for the nnpfa atlas_id, and decodes an nnpfa_cancel _flag[i] for the attribute image i using a loop variable i from i = 0 .. nnpfa _attribute_count-1. Further, in a case that the nnpfa cancel _flag[i] is 0, the header decoder 301 decodes an nnpfa_target_id[i] and an nnpfa_persistence_flag[i] for the attribute image i.

The header decoder is configured to decode an attribute image count and decode a cancel flag for each attribute image i where i = 0 .. attribute image count - 1, identification information of the characteristics information for each attribute image i, and the persistence information for each attribute image i.

The above achieves the advantage that it is possible to specify post-filtering processing of a neural network in units of attribute images using characteristics information while canceling post-filtering processing of a neural network in units of attribute images.

In the present example, the header decoder is configured to decode identification information of the characteristics information for each attribute image i and the persistence information for each attribute image i in a case that a cancel flag for each attribute image i is 0.

Another Example 2 of Activation SEI

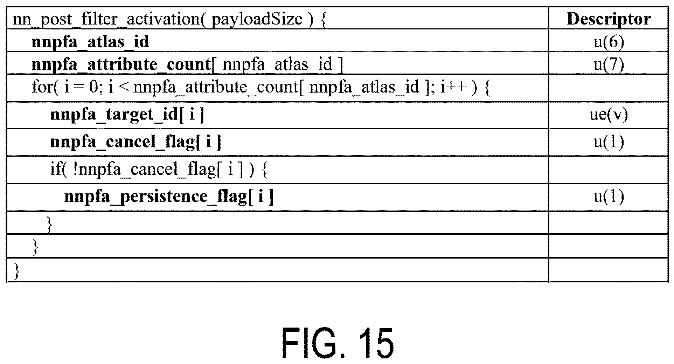

FIG. 15 shows another example configuration of a syntax of activation SEI. i is a value for identifying each attribute image included in a target atlas indicated by an nnpfa atlas_id, where i = attrIdx. Here, an nnpfa cancel _flag[i] has the following meaning.

The nnpfa_cancel_flag[i] being 1 indicates that maintenance of a neural-network-based post-filter configured in previous characteristics SEI specified by an nnpfa atlas_id, an attribute image ID i, and an nnpfa_target_id[i] is to be canceled. The nnpfa_cancel_flag[i] being 0 indicates that a subsequent syntax is to be transmitted, encoded, and decoded.

The header decoder 301 decodes an nnpfa atlas_id, decodes an nnpfa attribute _count for the nnpfa atlas_id, and decodes an nnpfa_target_id[i] and an nnpfa cancel _flag[i] for the attribute image i using a loop variable i from i = 0 .. nnpfa _attribute_count-1. Further, in a case that the nnpfa_cancel_flag[i] is 0, the header decoder 301 decodes an nnpfa_persistence_flag[i] for the attribute image i.

The header decoder is configured to decode identification information of the characteristics information for each attribute image i and a cancel flag for each attribute image i and decode the persistence information for each attribute image i in a case that the cancel flag for the attribute image i is 0.

The above achieves the advantage that it is possible to reduce the amount of code because persistence information nnpfa_persistence_flag[i] is not specified for the attribute image i in a case that post-filtering processing of a neural network identified by the characteristics information in units of attribute images is canceled (nnpfa_cancel_flag[i] == 1).

The above achieves the advantage that it is possible to specify post-filtering processing of a neural network in units of attribute images using characteristics information while canceling post-filtering processing of a neural network identified by the characteristics information in units of attribute images.

In the present example, the header decoder is configured to further decode an enabled flag for each attribute image i, decode identification information of the characteristics information for each attribute image i and a cancel flag for each attribute image i in a case that the enabled flag for i is not 0, and decode the persistence information for each attribute image i in a case that the cancel flag for the attribute image i is 0.

The above achieves the advantage that it is possible to specify post-filtering processing of a neural network in units of attribute images using characteristics information while canceling post-filtering processing of a neural network identified by the characteristics information in units of attribute images.

Another Example 3 of Activation SEI

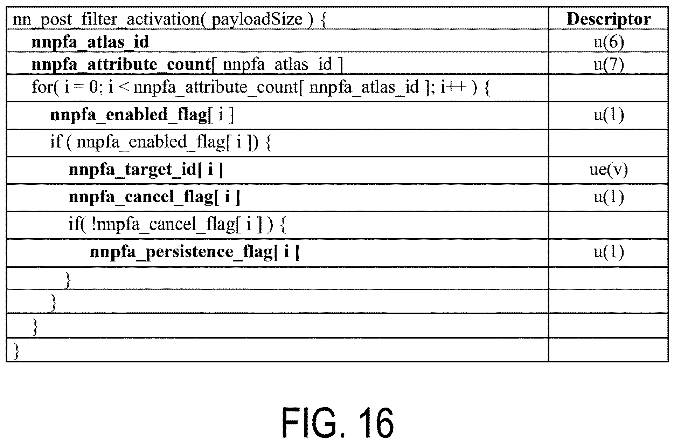

FIG. 16 shows another example configuration of a syntax of activation SEI. i is a value for identifying each attribute image included in a target atlas indicated by an nnpfa atlas_id, where i = attrIdx. Here, the meaning of an nnpfa_cancel _flag[i] has already been described in Another Example 2 of Activation SEI.

The nnpfa_cancel_flag[i] being 1 indicates that maintenance of a neural-network-based post-filter, which has been configured in previous NNPF A SEI such that characteristics SEI of an nnpfa_target_id[i] is to be used for an atlas id and an attribute image i, is to be canceled. The nnpfa_cancel _flag[i] being 0 indicates that a subsequent syntax is to be transmitted, encoded, and decoded.

The header decoder 301 decodes an nnpfa atlas_id, decodes an nnpfa attribute _count for the nnpfa atlas_id, and decodes an enabled flag nnpfa _enabled _flag[i] for the attribute image i using a loop variable i from i = 0 .. nnpfa_attribute _count-1. Further, in a case that the nnpfa enabled _flag[i] is not 0, the header decoder 301 decodes an nnpfa_target_id[i] and an nnpfa cancel _flag[i] for the attribute image i. Further, in a case that the nnpfa cancel_flag[i] is 0, the header decoder 301 decodes an nnpfa_persistence_flag[i] for the attribute image i.

In the present example, the header decoder is configured to further decode an enabled flag for each attribute image i and decode identification information of the characteristics information for each attribute image i and a cancel flag for each attribute image i in a case that the enabled flag for i is not 0, and decode the persistence information for each attribute image i in a case that the cancel flag for the attribute image i is 0.

The above achieves the advantage that it is possible to reduce the amount of code because characteristics information nnpfa_target_id[i] is not specified for the attribute image i in a case that post-filtering processing of a neural network identified by the characteristics information in units of attribute images is disabled (nnpfa_enabled_flag[i] == 0).

Another Example 4 of Activation SEI

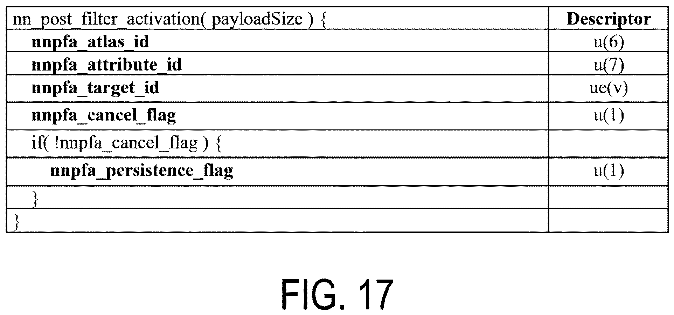

FIG. 17 shows another example configuration of a syntax of activation SEI. Here, an nnpfa_cancel_flag has the following meaning.

The nnpfa_cancel _flag being 1 indicates that maintenance of a neural-network-based post-filter, which has been configured in previous NNPF A SEI such that characteristics SEI of an nnpfa _target_id is to be used for an atlas id and an attribute image i, is to be canceled. The nnpfa_cancel _flag being 0 indicates that a subsequent syntax is to be transmitted, encoded, and decoded.

The header decoder 301 decodes an nnpfa_atlas_id indicating a target atlas and an nnpfa_attribute_id indicating a target attribute image and decodes an nnpfa_target_id and an nnpfa_cancel _flag for the nnpfa_atlas_id and the nnpfa _attribute_id. Further, in a case that nnpfa cancel _flag is 0, the header decoder 301 decodes an nnpfa_persistence_flag for the attribute image of the nnpfa attribute_id.

In the present example, the header decoder is configured to decode an identifier of the attribute image, the cancel flag, and the persistence information.

The above configuration achieves the advantage that the persistence of the post-filter can be specified in units of target attribute images.

Detailed Description of Configuration

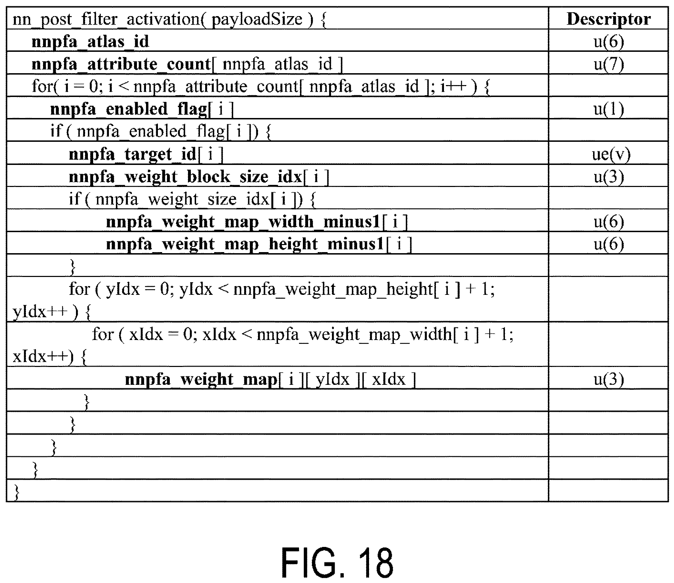

FIG. 18 shows an example configuration of an nn_post_filter_activation syntax of activation SEI. i is a value for identifying each attribute image included in a target atlas indicated by an nnpfa atlas_id, where i = attrIdx.

An nnpfa_filter_weight[i] is a value indicating a weighting coefficient of a neural network post-filter that the attribute image filter unit 308 uses for the attribute image i.

An nnpfa_weight_block_size_idx[i] indicates the size in a target attribute image of a two-dimensional map indicating the weighting coefficient of the filter of the attribute image i. The size is equal to ((1 << weightSizeShift[i]) x (1 << weightSizeShift[i])). Here, in a case that weightSizeShift[i] == 0, it indicates that the attribute image is not divided within the picture and the entire surface is processed on a pixel by pixel basis.

```
weightSizeShift[i]==nnpfa_weight_block_size_idx==0 ? 0 : nnpfa_weight_block_s
ize_idx[i] + 5
```

An nnpfa_weight_map_width_minus1[i] indicates the width of a two-dimensional map indicating the weighting coefficient of the filter of the attribute image i minus 1. When this is not present in the syntax, it is inferred that nnpfa_weight_map_width_minus1[i] = 0.

An nnpfa_weight_map_height_minus1[i] indicates the height of a two-dimensional map indicating the weighting coefficient of the filter of the attribute image i minus 1. When this is not present in the syntax, it is inferred that nnpfa_weight_map_height_minus1[i] = 0.

An nnpfa_weight_map[i][yIdx][xIdx] indicates a two-dimensional weighting coefficient map used in filtering processing of the attribute image i.

The header decoder is configured to decode a weight value for changing the weighting of a neural-network-filtered image and a neural-network-unfiltered image in units of attribute images.

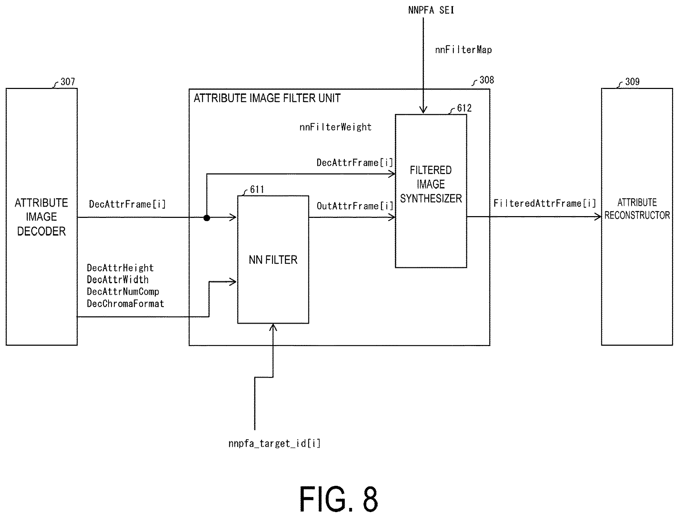

FIG. 8 is a functional block diagram illustrating a configuration of the attribute image filter unit 308. The attribute image filter unit 308 includes an NN filter unit 611 and a filtered image synthesizer 612.

In a case that nnpfa_enabled_flag[i] is 0, the attribute image i is not processed by the neural network filter. In a case that nnpfa enabled _flag[i] is 1, the header decoder 301 decodes an nnpfa_target_id[i] and a value nnpfa_weight_map[i][yIdx][xIdx] indicating the strength of the weight of the neural network filter for the attribute image i and derives the weight coefficient nnFilterMap of the neural network filter for the attribute image i of frameIdx from the nnpfa_weight_map as follows. The nnFilterMap is used as an nnFilterWeight.

```
nnFilterMap[i][partIdx][mapIdx][frameIdx][yIdx][xIdx] = nnpfa_weight_map[i][yId
x][xIdx]==0 ? 0 : nnpfa_weight_map[i][yIdx][xIdx]+1
```

Here, in a case that nnpfa_weight_map! = 0, 1 is added to the value of nnpfa_weight_map and the values of nnpfa_weight_map = 0 .. 7 are assigned to the values of 0, 2 .. 8, such that the number of bits of the weighting coefficient can be reduced by 1 bit.

Here yIdx = 0 .. nnpfa_weight_map_height_minus1[i] and xIdx = nnpfa_weight_map_width_minus1 [i] - 1.

Further, the following weighting is performed using an NN-filtered image OutAttrFrame and an NN-unfiltered image DecAttrFrames.

```
FilteredPic[cIdx][y][x] = (nnFilterWeight[yIdx][xIdx] * FilteredPic[cIdx][y][x]
 + ((1<<shift) - nnFilterWeight[yIdx][xIdx]) * DecAttrFrames[cIdx][y][x] + offs
et)) >> shift
```

Here, cIdx is the index of the color component, y is 0 to nnpfc_pic_height_in_luma_samples-1, and x is 0 to nnpfc_pic_width_in_luma_samples-1. The following configurations may be used.

$$xIdx = (weightSizeShift==0) ? 0 : x>>weightSizeShift$$

$$yIdx = (weightSizeShift==0) ? 0 : y>>weightSizeShift$$

$$shift = 3$$

The derived FilteredPic image is set to DecAttrFrames again.

```
DecAttrFrames[attrIdx][partIdx][mapIdx][frameIdx][cIdx][y][x] = FilteredPic[cId
x][y][x]
```

According to the above configuration, because the weighting coefficient of the neural network filter is specified for each attribute image i, the filter can be applied to each attribute image with a different strength, thus achieving the advantage of improving the image quality.

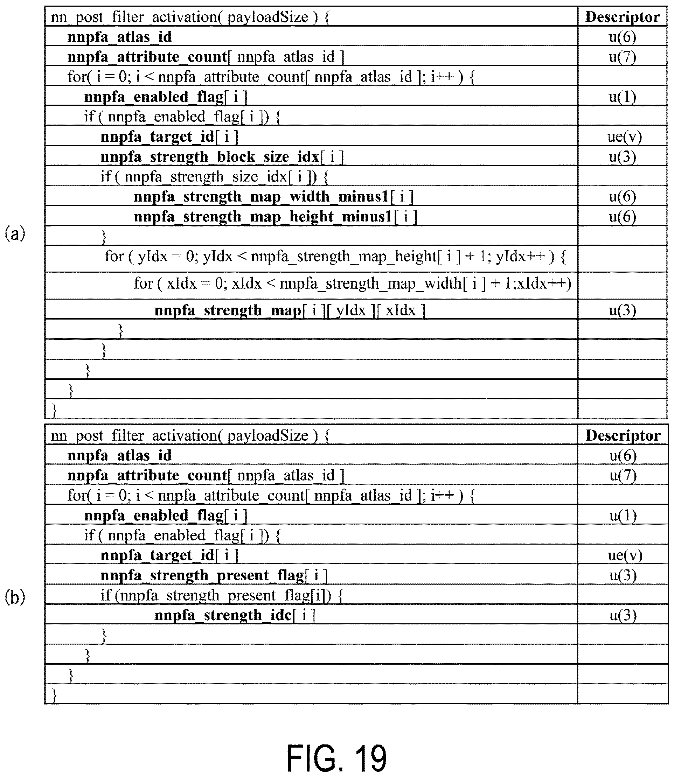

FIG. 19 shows an example configuration of a syntax of activation SEI. i is a value for identifying an attribute image, where i = attrIdx. The header decoder 301 may decode the syntax shown in FIG. 19(a).

According to the above configuration, the weight of an output image of a neural network is changed by a decoded weight variable nnpfa strength_map according to attribute image unit and a frame to which the activation SEI is applied. This achieves the advantage that it is possible to perform suitable filtering processing that is highly effective in improving the image quality.

An nnpfa_strength_block_size_idx[i] indicates the size in a target attribute image of a two-dimensional map indicating the strength coefficient that is set in an input tensor to the filter of the attribute image i. The size is equal to ((1 << strengthSizeShift[i]) x (1 << strengthSizeShift[i])). Here, in a case that strengthSizeShift[i] == 0, it indicates that the attribute image is not divided within the picture and the whole image is processed on a pixel by pixel basis.

```
strengthSizeShift[i] == nnpfa_strength_block_size_idx==0 ? 0 : nnpfa_strength
_block_size_idx[i] + 5
```

An nnpfa_strength _map_width_minus1[i] indicates the width of a two-dimensional map indicating the strength coefficient of the filter of the attribute image i minus 1. When this is not present in the syntax, it is inferred that nnpfa_strength_map_width_minus1[i] = 0.

An nnpfa strength_map_height_minus 1 [i] indicates the height of a two-dimensional map indicating the strength coefficient of the filter of the attribute image i minus 1. When this is not present in the syntax, it is inferred that nnpfa strength_map_height_minus1[i] = 0.

An nnpfa_strength_map[i][yIdx][xIdx] indicates a two-dimensional strength coefficient map used in filtering processing of the attribute image i.

The attribute image filter unit 308 derives an array StrengthMap as follows.

$$\mathrm{StrengthMap[attrIdx][partIdx][mapIdx][frameIdx][yIdx][xIdx]} = \mathrm{nnpfa\_strength\_map[i][yIdx][xIdx]}+1$$

Here, yIdx = 0 .. nnpfa strength_map_height_minus1 [i] and xIdx = 0 .. nnpfa strength_map_width_minus1 [i].

Here, in a case that nnpfa strength _map! = 0, 1 is added to the value of nnpfa strength_map and the values of nnpfa strength_map = 0 .. 7 are assigned to the values of 0, 2 .. 8, such that the number of bits of the strength coefficient can be reduced by 1 bit.

The header decoder 301 decodes the number of attribute images included in the target atlas information nnpfa_attribute_count. In a case that nnpfa_attribute_count[atlasID] is 0, it indicates that there is no attribute information. In a case that an nnpfa attribute _count is not 0, the following process is performed for each attribute image i.

An nnpfa enabled _flag[i] indicating whether to perform post-filtering using a neural network on an attribute image i is decoded. In a case that nnpfa enabled _flag[i] is 0, the attribute image i is not processed by the neural network filter. In a case that nnpfa_enabled_flag[i] is not 0, the header decoder 301 decodes the following parameters relating to neural network filtering processing.

An nnpfa_target_id[i] is decoded and the decoded value is set in an array TargetId[i][partIdx][mapIdx][frameIdx] indicating the index of the characteristics SEI regarding the current attribute image i (=attrIdx) and the AtlasID.

An nnpfa_filter_weight[i] is decoded and the decoded value is set in a four-dimensional array FilterWeight [i][partIdx][mapIdx][frameIdx] indicating the weighting coefficient of the NN post-filter.

An nnpfa_strength_block_size_idx is decoded. In a case that the nnpfa_strength_block_size_idx[i] is not 0, an nnpfa_strength_map_width_minus1[i] and an nnpfa_strength_map_height_minus1[i] are decoded. Values obtained by adding 1 to the nnpfa strength_map_width_minus1[i] and the nnpfa strength_map_height_minus1[i] are set in arrays StrengthMapWidth[i][partIdx][mapIdx][frameIdx] and StrengthMapHeight[i][partIdx][mapIdx][frameIdx] that indicate the width and height of the strength coefficient map.

In a case that nnpfa strength_block_size_idx = 0, nnpfa _strength _map_width_minus1[i]=0 and nnpfa_strength_map_height_minus1[i]=0 are introduced and the above operation is performed. Alternatively, Strength-MapWidth=1 and StrengthMapHeight=1 may be directly set.

An nnpfa_strength_map[i] [yIdx] [xIdx] is decoded and the decoded value is set in an array StrengthMap[i][partIdx][mapIdx][frameIdx][yIdx][xIdx] indicating the strength map.

$$\mathrm{StrengthMap[i][partIdx][mapIdx][frameIdx][yIdx][xIdx]} = \mathrm{nnpfa\_strength\_map[i][yIdx][xIdx]}$$

Other syntax elements are the same as those in FIG. 13 and description thereof will be omitted.

The header decoder 301 may decode the syntax shown in FIG. 19(b). Here, the activation SEI includes a value nnpfa strength_idc[i] instead of the array nnpfa strength_map.

StrengthMap[i][partIdx][mapIdx][frameIdx][yIdx][xIdx]=nnpfa_strength_idc[i] is set.

The header decoder is configured to decode a strength variable that is input as a channel of an input tensor from coded data of activation SEI in units of attribute images. The strength variable may be an array determined according to coordinates (X coordinate, Y coordinate) indicating a position within a picture. The size (unit) of an area for which the strength variable is changed such as an nnpfa strength_block_size_idx may also be decoded from the coded data of the activation SEI in units of attribute images.

According to the above configuration, the value of the input tensor of the neural network is set by a decoded strength variable according to attribute images unit and a frame to which the activation SEI is applied. This achieves the advantage that it is possible to perform suitable filtering processing that is highly effective in improving the image quality.

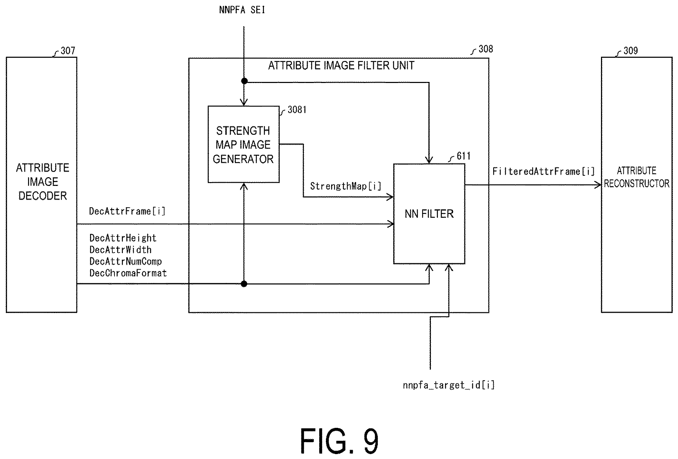

FIG. 9 is an example of a functional block diagram illustrating a configuration of the attribute image filter unit 308 in the 3D data decoding apparatus 31. The attribute image filter unit 308 includes a strength map image generator 3081 and an NN filter unit 611.

According to the above configuration, because a strength is decoded for each attribute image i and specified as one component (one channel) of an input tensor, the filter can be applied to each attribute image with a different strength, thus achieving the advantage of improving the image quality.

Further, according to the above configuration, because either a single strength or a two-dimensional strength can be selected in units of attribute images, a two-dimensional strength can be used in a case that there are large variations in strength within the picture and a single strength can be used in other cases. Also, because the size (granularity) of the two-dimensional strength can also be set, it is possible to balance the amount of code and image quality. Furthermore, because the size of the strength map is directly specified, the number of syntax elements of the nnpfa_strength_map is determined without decoding the attribute images (DecAttrWidth and DecAttrHeight), thus facilitating decoding.

nnpfa_target_id, DecAttrHeight, DecAttrWidth, DecAttrNumComp, DecAttrChromaFormat, and DecAttrFrames are input to the NN filter unit 611. The NN filter unit 611 outputs FilteredAttrFrame[][][].

Configuration of 3D Data Coding Apparatus

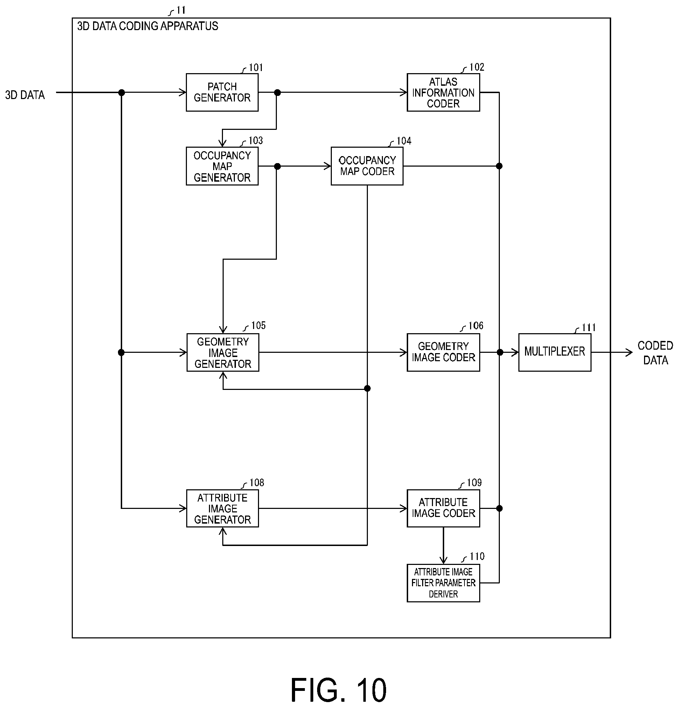

FIG. 10 is a functional block diagram illustrating a schematic configuration of the 3D data coding apparatus 11 according to an embodiment of the present invention.

The 3D data coding apparatus 11 includes a patch generator 101, an atlas information coder 102, an occupancy map generator 103, an occupancy map coder 104, a geometry image generator 105, a geometry image coder 106, an attribute image generator 108, an attribute image coder 109, an attribute image filter parameter deriver 110, and a multiplexer 111. The 3D data coding apparatus 11 receives a point cloud or a mesh as 3D data and outputs coded data.

The patch generator 101 receives 3D data and generates and outputs a set of patches (here, rectangular images). Specifically, 3D data is divided into a plurality of regions and each region is projected onto one plane of a 3D bounding box (FIG. 3(a)) set in a 3D space to generate a plurality of patches. The patch generator 101 outputs information regarding the 3D bounding box (such as coordinates and sizes) and information regarding mapping to the projection planes (such as the projection planes, coordinates, sizes, and presence or absence of rotation of each patch) as atlas information.

The atlas information coder 102 encodes the atlas information output from the patch generator 101 and outputs a coded atlas information stream. The atlas information coder 102 sets the value of an atlasID to which the SEI is applied to an nnpfa atlas_id.

The occupancy map generator 103 receives the set of patches output from the patch generator 101 and generates an occupancy map that represents valid areas of patches (areas where 3D data exists) as a 2D binary image (e.g., with 1 for a valid area and 0 for an invalid area) (FIG. 3(b)). Here, other values such as 255 and 0 may be used for a valid area and an invalid area.

The occupancy map coder 104 receives the occupancy map output from the occupancy map generator 103 and outputs a coded occupancy map stream and a coded occupancy map. VVC, HEVC, or the like is used as a coding scheme.

The geometry image generator 105 generates a geometry image that stores depth values for the projection planes of patches based on the 3D data, the occupancy map, the coded occupancy map, and the atlas information (FIG. 3(c)). The geometry image generator 105 derives a point with the smallest depth to the projection plane among points that are projected onto pixels g(x, y) as p_min(x, y, z). The geometry image generator 105 also derives a point with the maximum depth among points that are projected onto pixel g(x, y) and located at a predetermined distance d from p_min(x, y, z) as p_max(x, y, z). A geometry image obtained by projecting p_min (x, y, z) on all pixels onto the projection plane is set as a geometry image of a Near layer (such as images 0, 2, 4, ..., 2N in FIG. 4). A geometry image obtained by projecting p_max (x, y, z) on all pixels onto the projection plane is set as a geometry image of a Far layer (such as images 1, 3, 5, ..., 2N+1 in FIG. 4).

The geometry image coder 106 receives a geometry image and outputs a coded geometry image stream and a coded geometry image. VVC, HEVC, or the like is used as a coding scheme. The geometry image coder 106 may also encode a geometry image of the Near layer as an intra-coded picture (an I picture) and a geometry image of the Far layer as an inter-coded picture (a P picture or a B picture).

The attribute image generator 108 generates an attribute image that stores color information (e.g., YUV values and RGB values) for the projection plane of each patch based on the 3D data, the coded occupancy map, the coded geometry image, and the atlas information (FIG. 3(d)). The attribute image generator 108 obtains a value of an attribute corresponding to the point p_min (x, y, z) with the minimum depth calculated by the geometry image generator 105 and sets an attribute image onto which the value is projected as an attribute image of the Near layer (such as images 0, 2, 4, ..., 2N in FIG. 4). An attribute image similarly obtained for p_max(x, y, z) is set as an attribute image of the Far layer (such as images 1, 3, 5, ..., 2N+1 in FIG. 4).

The attribute image coder 109 receives an attribute image and outputs a coded attribute image stream and a coded attribute image. VVC, HEVC, or the like is used as a coding scheme. The attribute image coder 109 may also encode an attribute image of the Near layer as an I picture and an attribute image of the Far layer as a P picture or a B picture. The attribute image coder 109 sets the value of an nnpfa attribute _count in the SEI.

The attribute image filter parameter deriver 110 receives the coded attribute image and the original attribute image, selects or derives optimal filter parameters for neural-network-based filtering processing, and outputs the optimal filter parameters.

The attribute image filter parameter deriver 110 sets the values of nnpfa enabled_flag, nnpfa_target_id, nnpfa_weight_block_size_idx, nnpfa_weight_map_width_minus1, nnpfa_weight_map_height_minus1 and nnpfa_weight_map in the SEI. The attribute image filter parameter deriver 110 may further set the values of nnpfa strength_blocksize_idx, nnpfa strength_map_width_minus1, nnpfa strength_map_height_minus1, and nnpfa strength_map.

The multiplexer 111 receives the filter parameters output from the attribute image filter parameter deriver 110 and outputs them in a predetermined format. Examples of the predetermined format include SEI which is supplemental enhancement information of video data, an ASPS and an AFPS which are data structure specification information in the V3C standard, and an ISOBMFF which is a media file format. The multiplexer 111 multiplexes the coded atlas information stream, the coded occupancy map stream, the coded geometry image stream, the coded attribute image stream, and the filter parameters and outputs the multiplexed data as coded data. A byte stream format, the ISOBMFF, or the like is used as a multiplexing method.

Although embodiments of the present invention have been described above in detail with reference to the drawings, the specific configurations thereof are not limited to those described above and various design changes or the like can be made without departing from the spirit of the invention.

Embodiments of the present invention are not limited to those described above and various changes can be made within the scope indicated by the claims. That is, embodiments obtained by combining technical means appropriately modified within the scope indicated by the claims are also included in the technical scope of the present invention.

Industrial Applicability

Embodiments of the present invention are suitably applicable to a 3D data decoding apparatus that decodes coded data into which 3D data has been encoded and a 3D data coding apparatus that generates coded data into which 3D data has been encoded. The present invention is also suitably applicable to a data structure for coded data generated by a 3D data coding apparatus and referenced by a 3D data decoding apparatus.

Reference Signs List

11 3D data coding apparatus
101 Patch generator
102 Atlas information coder
103 Occupancy map generator
104 Occupancy map coder
105 Geometry image generator
106 Geometry image coder
108 Attribute image generator
109 Attribute image coder
110 Attribute image filter parameter deriver
111 Multiplexer
21 Network
31 3D data decoding apparatus
301 Header decoder
302 Atlas information decoder
303 Occupancy map decoder
304 Geometry image decoder
306 Geometry reconstructor
307 Attribute image decoder
308 Attribute image filter unit
309 Attribute reconstructor
310 3D data reconstructor
41 3D data display device

**Claims**

1. A decoding apparatus for decoding coded data, the decoding apparatus comprising:

   a header decoder configured to decode characteristics information of a neural network post-filter and activation information of the neural network post-filter from the coded data;
   an attribute image decoder configured to decode an attribute image from the coded data; and
   an attribute image filter unit configured to perform post-filtering processing of the attribute image,
   wherein the header decoder is configured to decode an atlas identifier, identification information of the characteristics information, a cancel flag, and persistence information from the activation information.

2. The decoding apparatus according to claim 1, wherein the header decoder is configured to decode a cancel flag for post-filtering processing for the atlas identifier.

3. The decoding apparatus according to claim 1, wherein the header decoder is configured to decode an attribute image count and decode a cancel flag respectively for attribute images i where i = 0 .. attribute image count - 1, the identification information of the characteristics information for each attribute image i, and the persistence information for each attribute image i.

4. The decoding apparatus according to claim 3, wherein the header decoder is configured to decode the identification information of the characteristics information for each attribute image i and the persistence information for each attribute image i, in a case that the cancel flag for the attribute image i is not 0.

5. The decoding apparatus according to claim 3, wherein the header decoder is configured to decode the identification information of the characteristics information for each attribute image i and a cancel flag for each attribute image i and decode the persistence information for each attribute image i, in a case that the cancel flag for the attribute image i is not 0.

6. The decoding apparatus according to claim 3, wherein the header decoder is configured to further decode an enabled flag for each attribute image i, decode the identification information of the characteristics information for each attribute image i and a cancel flag for each attribute image i, in a case that the enabled flag for the attribute image i is not 0, and decode the persistence information for each attribute image i in a case that the cancel flag for the attribute image i is not 0.

7. The decoding apparatus according to claim 1, wherein the header decoder is configured to decode an identifier of an attribute image, the cancel flag, and the persistence information.

8. The decoding apparatus according to claim 1, wherein the header decoder is configured to decode a strength variable that is input as a channel of an input tensor in units of attribute images.

9. The decoding apparatus according to claim 1, wherein the header decoder is configured to decode a weight value for changing weighting of a neural-network-filtered image and a neural-network-unfiltered image in units of attribute images.

10. A coding apparatus for decoding coded data, the coding apparatus comprising:

    a header coder configured to encode characteristics information of a neural network post-filter and activation information of the neural network post-filter from the coded data;
    an attribute image decoder configured to decode an attribute image from the coded data; and
    an attribute image filter unit configured to perform post-filtering processing of the attribute image,
    wherein the header decoder is configured to encode an atlas identifier, identification information of the characteristics information, a cancel flag, and persistence information from the activation information.

1

| T | 3D DATA CODING APPARATUS | Te | | Te | 3D DATA DECODING APPARATUS | Td | 3D DATA DISPLAY DEVICE |

3D DATA CODING APPARATUS
11

21

3D DATA DECODING APPARATUS
31

3D DATA DISPLAY DEVICE
41

# FIG. 1

FIG. 2

(b) OCCUPANCY MAP

3D BOUNDING BOX

(a) 3D DATA (POINT CLOUD)

(c) GEOMETRY IMAGE

(d) ATTRIBUTE IMAGE

# FIG. 3

FIG. 4

CHARACTERISTICS
SEI → NNC DECODER → NN MODEL → NN FILTER UNIT → 611

COMPRESSED
NN MODEL

IDENTIFY CHARACTERISTICS SEI USING nnpfa_target_id

ACTIVATION SEI – – – – – – – – – – – – – – – – – – – – → ATTRIBUTE IMAGE frameIdx

SPECIFY ATTRIBUTE IMAGE FOR
ACTIVATION

# FIG. 5

FIG. 6

FIG. 7

NNPFA SEI

nnFilterMap

307

ATTRIBUTE IMAGE FILTER UNIT

308

612

nnFilterWeight

DecAttrFrame[i]

FILTERED
IMAGE
SYNTHESIZER

309

ATTRIBUTE
IMAGE
DECODER

DecAttrFrame[i]

611

OutAttrFrame[i]

FilteredAttrFrame[i]

ATTRIBUTE
RECONSTRUCTOR

DecAttrHeight
DecAttrWidth
DecAttrNumComp
DecChromaFormat

NN FILTER

nnpfa_target_id[i]

# FIG. 8

NNPFA SEI

307

ATTRIBUTE IMAGE FILTER UNIT 308

309

STRENGTH MAP IMAGE GENERATOR 3081

StrengthMap[i]

611

ATTRIBUTE IMAGE DECODER

DecAttrFrame[i]

DecAttrHeight
DecAttrWidth
DecAttrNumComp
DecChromaFormat

NN FILTER

FilteredAttrFrame[i] ATTRIBUTE RECONSTRUCTOR

nnpfa_target_id[i]

# FIG. 9

FIG. 10

START

S6001

DECODE cancel_flag

S6002

cancel_flag — Y

N

S6003

DECODE nnpfa_persistence_flag FOR SPECIFIED i

S6004

DECODE nnpfa_target_id FOR SPECIFIED i

S6005

DERIVE NN MODEL PARAMETERS CORRESPONDING TO nnpfa_target_id

S6006

NN FILTERING PROCESSING ON SPECIFIED i

Y

S6008

END

# FIG. 11

| nn_post_filter_characteristics( payloadSize ) { | Descriptor |
|---|---|
| **nnpfc_id** | ue(v) |
| **nnpfc_mode_idc** | ue(v) |
| if( nnpfc_mode_idc == 1 ) { | |
| while( !byte_aligned( ) ) | |
| **nnpfc_reserved_zero_bit_a** | u(1) |
| **nnpfc_tag_uri** | st(v) |
| **nnpfc_uri** | st(v) |
| } | |
| **nnpfc_formatting_and_purpose_flag** | u(1) |
| if( nnpfc_formatting_and_purpose_flag ) { | |
| **nnpfc_purpose** | ue(v) |
| if( nnpfc_purpose == 2 \|\| nnpfc_purpose == 4 ) { | |
| **nnpfc_out_sub_c_flag** | u(1) |
| } | |
| if( nnpfc_purpose == 3 \|\| nnpfc_purpose == 4 ) { | |
| **nnpfc_pic_width_in_luma_samples** | ue(v) |
| **nnpfc_pic_height_in_luma_samples** | ue(v) |
| } | |
| /* input and output formatting */ | |
| **nnpfc_component_last_flag** | u(1) |
| **nnpfc_inp_format_idc** | ue(v) |
| if( nnpfc_inp_format_idc == 1 ) | |
| **nnpfc_inp_tensor_bitdepth_minus8** | ue(v) |
| **nnpfc_inp_order_idc** | ue(v) |
| **nnpfc_auxiliary_inp_idc** | ue(v) |
| **nnpfc_out_format_idc** | ue(v) |
| if( nnpfc_out_format_idc == 1 ) | |
| **nnpfc_out_tensor_bitdepth_minus8** | ue(v) |
| **nnpfc_out_order_idc** | ue(v) |
| **nnpfc_constant_patch_size_flag** | u(1) |
| **nnpfc_patch_width_minus1** | ue(v) |
| **nnpfc_patch_height_minus1** | ue(v) |
| **nnpfc_overlap** | ue(v) |
| **nnpfc_padding_type** | ue(v) |
| **nnpfc_complexity_idc** | ue(v) |
| if( nnpfc_complexity_idc > 0 ) | |
| nnpfc_complexity_element( nnpfc_complexity_idc ) | |
| } | |
| /* filter specified or updated by ISO/IEC 15938-17 bitstream */ | |
| if( nnpfc_mode_idc == 1 ) { | |
| while( !byte_aligned( ) ) | |
| **nnpfc_reserved_zero_bit** | u(1) |
| for( i = 0; more_data_in_payload( ); i++ ) | |
| **nnpfc_payload_byte[ i ]** | b(8) |
| } | |
| } | |

# FIG. 12

| nn_post_filter_activation( payloadSize ) { | Descriptor |
|---|---|
| **nnpfa_atlas_id** | u(6) |
| **nnpfa_cancel_flag** | u(1) |
| if( !nnpfa_cancel_flag ) { | |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_enabled_flag**[ i ] | u(1) |
| if ( nnpfa_enabled_flag[ i ]) { | |
| **nnpfa_target_id**[ i ] | u(1) |
| **nnpfa_persistence_flag**[ i ] | u(1) |
| } | |
| } | |
| } | |
| } | |

# FIG. 13

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_cancel_flag[ i ]** | u(1) |
| if( !nnpfa_cancel_flag[ i ] ) { | |
| **nnpfa_target_id[ i ]** | ue(v) |
| **nnpfa_persistence_flag[ i ]** | u(1) |
| } | |
| } | |
| } | |

# FIG. 14

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_target_id**[ i ] | ue(v) |
| **nnpfa_cancel_flag**[ i ] | u(1) |
| if( !nnpfa_cancel_flag[ i ] ) { | |
| **nnpfa_persistence_flag**[ i ] | u(1) |
| } | |
| } | |
| } | |

# FIG. 15

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_enabled_flag**[ i ] | u(1) |
| if ( nnpfa_enabled_flag[ i ]) { | |
| **nnpfa_target_id**[ i ] | ue(v) |
| **nnpfa_cancel_flag**[ i ] | u(1) |
| if( !nnpfa_cancel_flag[ i ] ) { | |
| **nnpfa_persistence_flag**[ i ] | u(1) |
| } | |
| } | |
| } | |
| } | |

# FIG. 16

| nn_post_filter_activation( payloadSize ) { | Descriptor |
|---|---|
| **nnpfa_atlas_id** | u(6) |
| **nnpfa_attribute_id** | u(7) |
| **nnpfa_target_id** | ue(v) |
| **nnpfa_cancel_flag** | u(1) |
| if( !nnpfa_cancel_flag ) { | |
| **nnpfa_persistence_flag** | u(1) |
| } | |
| } | |

# FIG. 17

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_enabled_flag**[ i ] | u(1) |
| if ( nnpfa_enabled_flag[ i ]) { | |
| **nnpfa_target_id**[ i ] | ue(v) |
| **nnpfa_weight_block_size_idx**[ i ] | u(3) |
| if ( nnpfa_weight_size_idx[ i ]) { | |
| **nnpfa_weight_map_width_minus1**[ i ] | u(6) |
| **nnpfa_weight_map_height_minus1**[ i ] | u(6) |
| } | |
| for ( yIdx = 0; yIdx < nnpfa_weight_map_height[ i ] + 1; yIdx++ ) { | |
| for ( xIdx = 0; xIdx < nnpfa_weight_map_width[ i ] + 1; xIdx++) { | |
| **nnpfa_weight_map**[ i ][ yIdx ][ xIdx ] | u(3) |
| } | |
| } | |
| } | |
| } | |
| } | |

# FIG. 18

| nn_post_filter_activation( payloadSize ) { | Descriptor |
|---|---|
|   **nnpfa_atlas_id** | u(6) |
|   **nnpfa_attribute_count**[ nnpfa_atlas_id ] | u(7) |
|   for( i = 0; i < nnpfa_attribute_count[ nnpfa_atlas_id ]; i++ ) { | |
|     **nnpfa_enabled_flag**[ i ] | u(1) |
|     if ( nnpfa_enabled_flag[ i ]) { | |
|       **nnpfa_target_id**[ i ] | ue(v) |
|       **nnpfa_strength_block_size_idx**[ i ] | u(3) |
|       if ( nnpfa_strength_size_idx[ i ]) { | |
|         **nnpfa_strength_map_width_minus1**[ i ] | u(6) |
|         **nnpfa_strength_map_height_minus1**[ i ] | u(6) |
|       } | |
|       for ( yIdx = 0; yIdx < nnpfa_strength_map_height[ i ] + 1; yIdx++ ) { | |
|         for ( xIdx = 0; xIdx < nnpfa_strength_map_width[ i ] + 1;xIdx++) | |
|         **nnpfa_strength_map**[ i ][ yIdx ][ xIdx ] | u(3) |
|         } | |
|       } | |
|       } | |
|     } | |
|   } | |

(a)

| nn_post_filter_activation( payloadSize ) { | Descriptor |
|---|---|
|   **nnpfa_atlas_id** | u(6) |
|   **nnpfa_attribute_count**[ nnpfa_atlas_id ] | u(7) |
|   for( i = 0; i < nnpfa_attribute_count[ nnpfa_atlas_id ]; i++ ) { | |
|     **nnpfa_enabled_flag**[ i ] | u(1) |
|     if ( nnpfa_enabled_flag[ i ]) { | |
|       **nnpfa_target_id**[ i ] | ue(v) |
|       **nnpfa_strength_present_flag**[ i ] | u(3) |
|       if (nnpfa_strength_present_flag[i]) { | |
|         **nnpfa_strength_idc**[ i ] | u(3) |
|       } | |
|     } | |
|   } | |
| } | |

(b)

# FIG. 19

Europäisches
Patentamt

European
Patent Office

Office européen
des brevets

# EUROPEAN SEARCH REPORT

Application Number

EP 23 21 8955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KEIICHIRO TAKADA ET AL: "[V-PCC] V3C neural-network post-filter SEI messages", 140. MPEG MEETING; 20221024 - 20221028; MAINZ; (MOTION PICTURE EXPERT GROUP OR ISO/IEC JTC1/SC29/WG11), , no. m60814 18 October 2022 (2022-10-18), XP030305297, Retrieved from the Internet: URL:https://dms.mpeg.expert/doc_end_user/documents/140_Mainz/wg11/m60814-v1-m60814-v1.zip m60814-v1/m60814_V3C_SEI.docx [retrieved on 2022-10-18] * page 1 - page 4 * | 1-10 | INV. H04N19/70 H04N19/117 H04N19/172 |
| Y | Y-K WANG (BYTEDANCE) ET AL: "AHG9: Activation of a neural-network post-processing filter for multiple pictures", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0050 ; m60766 13 October 2022 (2022-10-13), XP030304460, Retrieved from the Internet: URL:https://jvet-experts.org/doc_end_user/documents/28_Mainz/wg11/JVET-AB0050-v1.zip JVET-AB0050-v1.docx [retrieved on 2022-10-13] * page 3 - page 4 * | 1-10 | |

TECHNICAL FIELDS
SEARCHED (IPC)

H04N

The present search report has been drawn up for all claims

| Place of search | Date of completion of the search | Examiner |
|---|---|---|
| Munich | 2 February 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022208534 A